# EUROPEAN PATENT APPLICATION

(11) **EP 2 000 774 A1**
(43) Date of publication of application: **10.12.2008**
(21) Application number: 08009416.2
(22) Date of filing: 21.05.2008
(51) Int. Cl.: G01C 21/36

(54) **Navigation apparatus and navigation program**

(30) Priority: 08.06.2007 JP 2007152487; 28.03.2008 JP 2008086456
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: Kramer - Barske - Schmidtchen

(57) **Abstract**

In consideration that the search target is limited to particular words, words that are shared in the reading of a plurality of sets of destination data are stored as search keywords. At same time, search keywords are appended to individual sets of destination data that are to be the search objects. In the case in which the search for a destination is carried out, keywords that match a part of the input characters are narrowed down and displayed as selectable keys. It is possible to eliminate input operations by the user selecting the relevant keyword. Reduction in the number of operations becomes possible by selecting keywords having three or more characters by a total of two operations, that is, the input of at least one character and its selection.

## Description

### 1. Field of the Invention

The present invention relates to navigation apparatuses and navigation programs, and relates to navigation apparatuses and navigation programs that, for example, search for a site by inputting a character string.

### 2. Description of the Related Art

In recent years, the use of navigation apparatuses to guide vehicles has become very widespread. A navigation apparatus is provided with a function that searches for routes from a departure point to a destination, a function that detects the position of the vehicle by using GPS (Global Positioning System) satellites and sensors such as gyroscopes, and a function that displays the route to the destination and the current position of a driver's vehicle on a map. Generally, in a navigation apparatus, as shown in Japanese Patent Application Publication No. JP-A-H11-271084, when searching for, for example, the name of place or name of facility of a destination, candidate locations are narrowed down by inputting the reading of a name, an address, a telephone number, or the like from a touch panel. Then, when the input of the reading and a search based on a genre has been completed, the candidate locations that have been narrowed down are displayed as a list on a display screen, and a user indicates a desired destination from among the items in the list.

### SUMMARY OF THE INVENTION

However, in the case in which a location of a destination is searched for by inputting the reading of a name thereof, it is necessary to input one character at a time, and this is inconvenient in terms of the number of operations and operation time. In addition, it is not possible to carry out the search based on characters that are not included in the reading of the location.

A mobile telephone or the like is provided with a function that displays candidates for the input characters by complementing the input characters, but this also only displays matching of beginning characters and characters that have been previously input, and cannot narrow down the candidates based on portions that omit the beginning characters. In addition, in a mobile telephone, because general use characteristics are provided assuming the input of all types of characters, frequently unnecessary words are displayed as complemented candidates, and thus the usability is low.

In contrast, in a navigation apparatus, in the case in which the candidate locations for a destination that have been narrowed down by a search are displayed in a list, they are displayed either in alphabetical order or in the order of coordinates (for example, from north to south).
When the order of the list display is set in this manner and there are numerous candidate locations, frequently there are displayed many candidate locations other than those with higher priority, and thus the usability is low.

Thus, it is an object of the present invention to carry out the input operation for a destination search in a navigation apparatus efficiently.

According to the present invention, a structure is used in which keywords that include the input characters are narrowed down and displayed, and the destination data that includes the selected keywords is narrowed down as candidate destinations, and thus it is possible to carry out the input operations for a destination search efficiently.

### BRIEF DESCRIPTION OF THE DRAWINGS

FIG. 1 is a system structure diagram of a navigation apparatus to which the present embodiment is applied;
FIG. 2 is an explanatory drawing that conceptually represents the content of destination data (location information) that is stored in a destination data file;
FIG. 3 is an explanatory drawing that conceptually represents the content of keywords that are contained in a keyword data file;
FIG. 4 is an explanatory drawing that represents an outline of priority order score modifying rules;
FIG. 5 is an explanatory diagram that represents an input device and a display;
FIG. 6 is a flowchart that represents the content of destination setting processing;
FIGS. 7A and 7B are explanatory drawings that illustrate the display states of the destination setting screen;
FIGS. 8A to 8D are explanatory drawings that represent the differences in the display of the lists in the case in which a modifying rule that changes the priority order score according to the season is applied as the priority order score modifying rule;
FIG. 9A to 9D are explanatory drawings that represent the differences in the display of the lists in the case in which a modifying rule that changes the priority order score according to the weather is applied as the priority order score modifying rule;
FIGS. 10A to 10C are explanatory drawings that represent the differences in the display of the lists in the case in which a modifying rule that changes the priority order score according to the time is applied as the priority order score modifying rule;
FIGS. 11A to 11C are explanatory drawings that represent the differences in the display of the lists in the case in which a modifying rule that changes the priority order score according to the calendar is applied as the priority order score modifying rule;
FIGS. 12A to 12C are explanatory drawings that represent the differences in the display of the lists in the case in which a modifying rule that changes the priority order score according to the present position is applied as the priority order score modifying rule;
FIGS. 13A to 13C are explanatory drawings that represent the differences in the display of the lists in the case in which a modifying rule that changes the priority order score according to the destination is applied as the priority order score modifying rule;
FIGS. 14A and 14B are explanatory drawings that represent the differences in the display of the list in the case in which a modifying rule that changes the priority order score according to the location is applied as the priority order score modifying rule;
FIGS. 15A and 15B are explanatory drawings that represent the differences in the display of the list in the case in which a modifying rule that changes the priority order score according to genre is applied as the priority order score modifying rule;
FIG. 16 is an explanatory drawing that schematically represents the content of the destination data (location information) that is stored in the destination data file in the navigation apparatus that has US specifications;
FIG. 17 is an explanatory drawing that schematically represents the content of the keywords that are contained in the keyword data file in the navigation apparatus that has US specifications;
FIG. 18 is an explanatory drawing that represents the input apparatus and the display in the navigation apparatus that has US specifications;
FIG 19A and 19B are explanatory drawings that represent the display state of the destination setting screen in the navigation apparatus that has US specifications;
FIGS. 20A to 20D are explanatory drawings that represent the differences in the display of the lists in the case in which a modifying rule that changes the priority order score according to the season is applied as the priority order score modifying rule in the navigation apparatus that has US specifications;
FIGS. 21A to 21D are explanatory drawings that represent the differences in the display of the lists in the case in which a modifying rule that changes the priority order score according to the weather is applied as the priority order score modifying rule in the navigation apparatus that has US specifications;
FIGS. 22A to 22D are explanatory drawings that represent the differences in the display of the lists in the case in which a modifying rule that changes the priority order score according to the time is applied as the priority order score modifying rule in the navigation apparatus that has US specifications;
FIGS. 23A to 23C are explanatory drawings that represent the differences in the display of the lists in the case in which a modifying rule that changes the priority order score according to the calendar is applied as the priority order score modifying rule in the navigation apparatus that has US specifications;
FIGS. 24A to 24C are explanatory drawings that represent the differences in the display of the lists in the case in which a modifying rule that changes the priority order score according to the current position is applied as the priority order score modifying rule in the navigation apparatus that has US specifications;
FIGS. 25A to 25C are explanatory drawings that represent the differences in the display of the lists in the case in which a modifying rule that changes the priority order score according to the destination is applied as the priority order score modifying rule in the navigation apparatus that has US specifications;
FIGS. 26A and 26B are explanatory drawings that represent the differences in the display of the lists in the case in which a modifying rule that changes the priority order score according to the location is applied as the priority order score modifying rule in the navigation apparatus that has US specifications; and
FIGS. 27A and 27B are explanatory drawings that represent the differences in the display of the lists in the case in which a modifying rule that changes the priority order score according to the genre is applied as the priority order score modifying rule.

### DETAILED DESCRIPTION OF THE PREFERRED EMBODIMENTS

### (1) Outline of the Embodiment

In the present embodiment, considering that a search object of a navigation apparatus is limited to particular words (names of locations and the like), identical words that are contained in the readings of a plurality of sets of destination data are extracted as search keywords, and saved in a keyword data file. The search keywords are created by extracting identical words that are contained in the readings of each set of destination data as keywords, and these search keywords are saved as a keyword data. For example, words that are used as a plurality of location names (the readings of destination locations) and various identical words such as those in "supermarket", "university", "information", "center", land", bank", "amusement park", "golf" and the like are extracted as keywords. In contrast, search keywords are appended to individual sets of destination data, which serves as the search target.

Note that keywords are created for various names of destinations, addresses, and genres, and are saved in a keyword data file so as to be distinguishable. In addition, keywords for names, addresses, and genres are also attached to each set of destination data.

In addition, when searching for a destination, keywords that partially match the input characters are retrieved, and the relevant keywords are displayed. These displayed keywords are displayed as selectable keys, and thus it is possible to omit input operations by the user selecting the corresponding keyword. For example, a reduction in the number of operations becomes possible by selecting a keyword having three or more characters by a total of two operations: inputting at least one character and the selection. Note that in the present embodiment, a partial matching is used, but a search using a matching of the beginning character is also possible.

The destinations, for which keywords have been narrowed down by using character input and which the input characters and readings partially match, and destination data, to which all keywords that partially match the input characters are appended, are narrowed down for use as candidate destinations. Thereby, narrowing down becomes possible based on any given characters during the reading of a destination. For example, for a restaurant called "Missoni Miso Cooking", due to the input of the characters "co", "cooking" becomes a target to be narrowed down because the restaurant name includes the keyword "cooking", and a search can be carried out that is based on one part of the memory.

For each keyword that is stored in the keyword data file, a keyword that is associated with this keyword is stored as an associated keyword. Thereby, it is also possible to carry out a search for candidates also based on words that are not included in the reading of a destination (name, address, genre) that is a search target.

In this manner, by using not only a character unit as the input unit, but also including keywords that have been inferred (narrowed down) based on the input characters and the associated keyword units, the number of the input operations can be reduced, and a search for a wider range of locations becomes possible, and it becomes possible to increase the circumstances in which simple inputting becomes possible. In addition, by creating a navigation keyword dictionary that is based on location information, excesses and deficiencies in location searches are eliminated, and thereby inputting and searching that is suitable for navigation becomes possible.

Furthermore, a priority level for determining the priority order is appended to each of the keywords when the keywords are displayed in a list. The priority level is set, for example, higher as the number of times that is used as the notation for the destinations is larger, or is determined in advance based on statistical values that represent the actual use of the notations. In addition, when an acceptance key is selected by the user after the character input for narrowing down and keyword selection, the location candidates are displayed in a list in a sequence starting from those with the highest priority level after updating the priority levels of the candidate locations of each of the destinations according to the priority order score modifying rules that modify the priority level depending on the season and the location. Thereby, the narrowed-down location candidates can be displayed in a list in an order that accords with the preferences of the user.

### (2) Details of the Embodiment

### First Embodiment

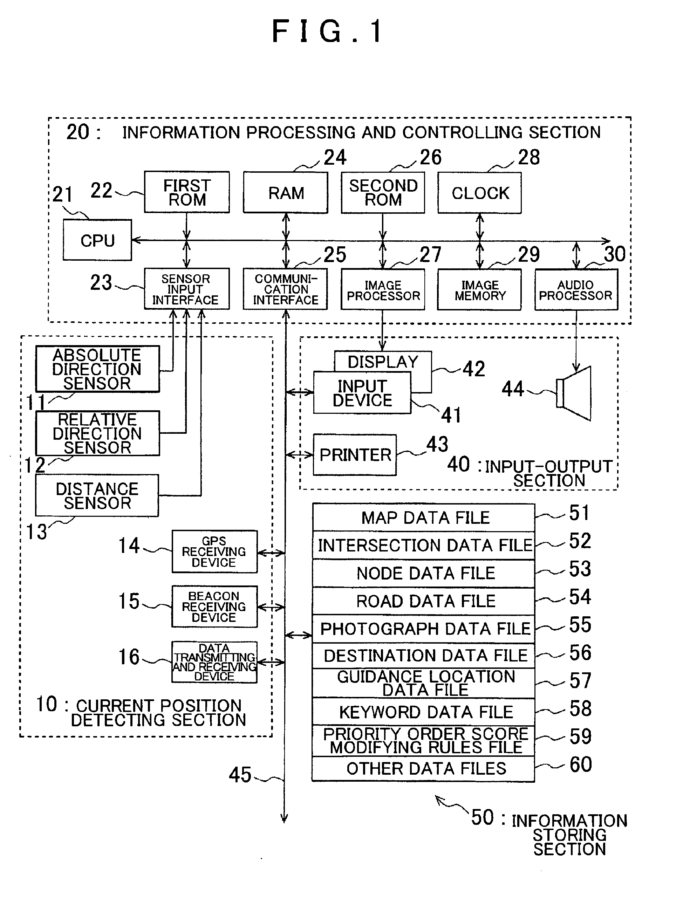

FIG. 1 is a system structure diagram of the navigation apparatus to which the present embodiment is applied. As shown in FIG. 1, this navigation apparatus is mounted on a vehicle, and is provided with a current position detecting section 10, an information processing and controlling section 20, an input-output section 40, and an information storing section 50. First, the current position detecting section 10 is structured as follows. The absolute direction sensor 11 may be a geomagnetism sensor that detects the direction in which the vehicle is positioned based on the detection of the North direction by a magnet, or may be a unit that detects the absolute direction.

The relative direction sensor 12 is a sensor that detects, for example, whether or not the vehicle has turned at an intersection, and may be an optical rotation sensor or a rotational-type resistance volume sensor that is installed to the rotating portion of the steering wheel, or an angle sensor that is installed to the vehicle wheel portion. In addition, a gyroscopic sensor that detects the changes in the angle by using the angular velocity may be used. Specifically, a unit that can detect an angle that changes relative to a reference angle (absolute direction) may be used. The distance sensor 13 may be a unit that, for example, detects and counts the rotations of the wheels, and may be a unit that detects acceleration and integrates the results twice. Specifically, a device that can measure the distance that the vehicle has moved may be used.

The GPS (Global Positioning System) receiving device 14 is a device that receives signals from satellites, and can obtain a variety of information, such as the time that a signal has been transmitted, the position information of the receiving device, the traveling speed of the receiving device, and the traveling direction of the receiving device and the like. The beacon receiving device 15 is a device that receives signals that has been transmitted by a transmitting device that is installed at specified locations. In particular, the apparatus can acquire VICS information, and can acquire information that is related to the traveling of the vehicle, such as traffic congestion information, current position information, and parking area information.

The data transmitting and receiving device 16 is a device that carries out communication with facilities outside the vehicle by using telephone circuits and radio waves, and carries out the exchange of information. There are various ways that the data transmitting and receiving device 16 can be used, such as a vehicle telephone, ATIS, VICS, GPS correction, communication between vehicles and the like, and it is possible to input and output information that is related to traveling. Next, the information processing and controlling section 20 is a unit that carries out the computing and control based on information that is input from and the current position detecting section 10 and the input output section 40, and information that is contained in the information storing section 50, and carries out control such that the results of the computations are output to output units such as a display 42, a printer 43, or a speaker 44.

This information processing and controlling section 20 is structured as follows. The central processing unit (CPU) 21 carries out the overall computing and control of the entire navigation apparatus. The first ROM 22 contains navigation programs related, in particular, to the detection of the current position, the search for routes, the display guidance, and the like. The input interface 23 is a device that receives information from the current position detecting section 10.

The RAM 24 is a storing unit for storing information that has been input by a user, such as information on the destinations, information on the transit points, and the like that have been input through an input device, which will be described below, and for storing the results that have been computed by the CPU 21 based on information that has been input by the user, the results of route searches, and map information that has been read from the information storing section 50. The communication interface 25 is a unit for inputting and outputting information from the current position detecting section 10, and in particular, information that has been obtained externally.

The second ROM 26 contains programs that are related to navigation, and in particular, navigation programs that are related to audio guidance. The image processor 27 is a processing unit for processing vector data that has been processed by the CPU into image data. The clock 28 tracks the time. The image memory 29 is a unit that contains image data that has been processed by an image processor. The audio processor 30 processes audio data that has been read from an information storing section and outputs the resultant data to the speaker.

The input-output section 40 is structured by an input device 41 into which the user inputs data such as the destination, the transit points, and search conditions, a display 42 that displays images, a printer 43 that prints information, and a speaker 44 that outputs audio. The input apparatus 41 is structured, for example, by a touch panel that is disposed on the surface of the display 42, touch switches, a joy stick, a key switch or the like. A map of the vicinity of the current location, various operation screens, and travel routes to a destination are displayed on the display 42.

The information storing section 50 is connected to the information processing and controlling section 20 via a transmission channel 45. The information storing section 50 contains a map data file 51, an intersection data file 52, a node data file 53, a road data file 54, a photograph data file 55, a destination data file 56, a guidance point data file 57, a keyword data file 58, a priority order score modifying rule file 59, and other data files 60. This information storing section 50 is generally structured, by a DVD-ROM or a CD-ROM, which are optical storage media, or a hard disk, which is a magnetic storage media, and the like, but may be structured by other types of information storage media, such as a magneto-optical disk, semiconductor memory, or the like.

Map data for national road maps, road maps and residential maps and the like for each region, are stored in the map data file 51. The road maps are structured by roads such as main trunk roads, highways, and local roads, and landmarks (facilities and the like). The residential maps are graphics that show the contours of buildings and the like, and city maps in which road names and the like are displayed. The local roads are comparatively narrow roads that have a road width that is equal to or less than a predetermined value, that is, equal to or less than a national road or a prefectural road, and to which traffic regulation information, such as "one way traffic", is not appended.

Geographic coordinates data for the nodes in the map that are used in route searches are stored in the node data file 53. Data related to roads, for example, the positions and types of roads, the number of traffic lanes, and the connection relationships between roads, is stored in the road data file 54. Image data for photographs that have been taken of locations, such as various facilities and tourist spots or main intersections, for which a visual display is required, is stored in the photograph data file 55. Guidance data for the content of guidance signs that are installed along the road, and locations that require guidance, such as guidance for branching points, is stored in the guidance point data file 57.

Data for targets of destination searches, such as main tourist spots and buildings, locations and facilities that can be selected as destinations, such as companies and offices that are listed in telephone books, are stored in the destination data file 56.

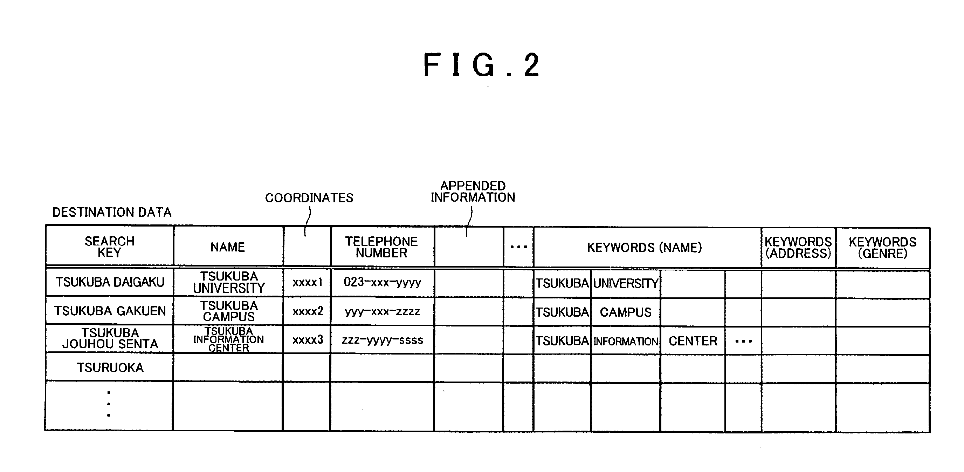

FIG. 2 conceptually represents the content of the destination data (location information) that is stored in the destination data file 56. As shown in FIG. 2, search keys, names, coordinates, telephone numbers, supplementary information, and the keywords, which are used in the present embodiment, are stored as destination data. The search keys are readings of the "names" of the destinations. These search keys are represented by using Japanese katakana script, which is compatible with the input device (the 50 alphabetic keys of the touch panel in the present embodiment), but may be represented by Japanese hiragana script. The coordinates are x and y coordinates information consisting of the latitude and longitude of the destinations. The supplementary information is detailed data related to the destinations.

The keywords are stored such that the keywords for name, address, and genre can be respectively distinguished. Among the keywords, which will be described below, keywords that correspond to destinations are stored. For example, as a name keyword, the keywords "Tsukuba" and "University" are stored for the destination "Tsukuba University", and in the case of the destination "Mr. Donald's, Tokyo Station shop," the keywords such as "Mr. Donald's" and "Tokyo Station" are stored. The keywords that correspond to the destinations are stored similarly for address and genre keywords. Here, a genre denotes a hierarchical classification of destinations, and classifies into categories such as "eat-drink", "buy-rent", "stay", "see-play", "car-related facility." In the lower level under "buy-rent", for example, "convenience store", "supermarket", "discount store", "department store" and the like are set. The types of genres to which each of the destinations belongs are determined in advance and stored.

There are cases in which contractions and nicknames and the like are stored as keywords in the destination data, even if the word is not included in the reading of the notation of the destination data. For example, as keywords for the destination name "Arcade Kogami XX Headquarters", in addition to "arcade", "Kogami", and "headquarters", a contraction such as "arcd" may be stored as a keyword.

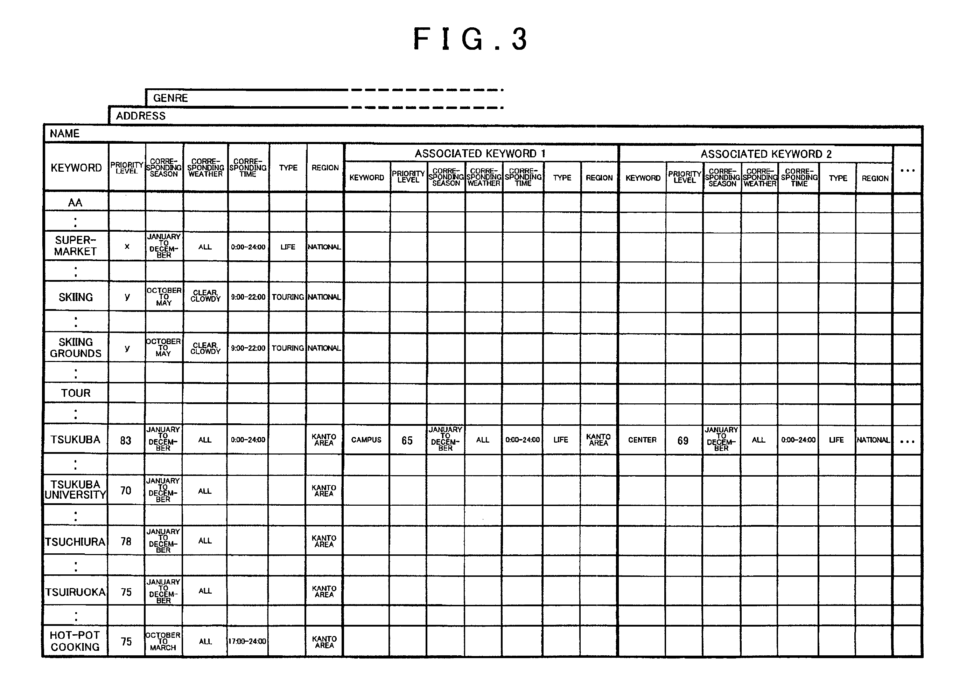

In FIG. 1, keywords that are searched in correspondence with the input characters are stored in the keyword data file 58. FIG. 3 conceptually shows the content of keywords that are contained in the keyword data file 58. As shown in FIG. 3, similar to the keywords that are contained in the destination data file 56, name keywords, address keywords, and genre keywords are contained therein. Each of the keywords is structured by a "word" (notation) that corresponds to each set of the destination data. "Words" that are included in a destination name and address and the like equal to or greater than a prescribed number are extracted as keywords, but in addition thereto, words that are contractions and abbreviations, such as "CS", which denotes "convenience store", or "arcd", which denotes "arcade", are also generated as keywords.

In the present embodiment, the keywords that have been narrowed down in correspondence to input characters, which will be described below, are displayed as input keys. In addition, a priority level is determined for each of the keywords, where the priority level is for determining the order when the keywords, which have been narrowed down according to the input characters, are displayed as keys. In addition, as modification conditions for modifying this priority level according to current conditions (time, place, and the like), there are the corresponding season, the corresponding weather, the corresponding time, type, and region, and the content of the conditions that correspond to each of these items is set for each of the keywords. For example, because the priority level for a location candidate that includes the keyword "hot-pot cooking" is set to "75" and the corresponding season is set to "October to March", if the time is within this period, a predetermined n points (for example, 3 points) are added to the priority level to change the priority level from 75 to 78.

In addition, there are keywords for which associated keywords are set. Associated keywords are "words" that have a high frequency of being input as search words along with the corresponding keyword. For example, "words" that form a part of or all of the notation for a destination, such as "campus" and "center" for the keyword "Tsukuba", are set along with this keyword.

For the associated keywords in the present embodiment, in the case in which a keyword that has been narrowed down in correspondence to the character input is selected by the user, the associated keywords to the selected keyword are displayed as keys for the next selected candidates (input candidates). In addition, for the associated keywords, in the case in which the total number of keywords that have been narrowed down according to the character input are less than a predetermined number (for example, the largest number that can be displayed on the screen), the associated keywords that correspond to the narrowed-down keywords are displayed. As shown in FIG. 3, for associated keywords, similar to keywords, the priority level and the corresponding seasons, the corresponding weather, the corresponding time, the type, and the region for modifying the priority level, are set as necessary. In addition, the associated keywords are contained as keywords for each set of destination data, and are treated identically to the keywords.

In the present embodiment, the keywords and the associated keywords are searched for as AND conditions when narrowing down the destination. Specifically, in the case in which the keyword "A" and the associated keyword "a" are selected, destination data that are provided as keywords with both "A" and "a" are narrowed down. The destinations are narrowed down as AND conditions between each of the keywords and associated keywords for names, addresses, and genres.

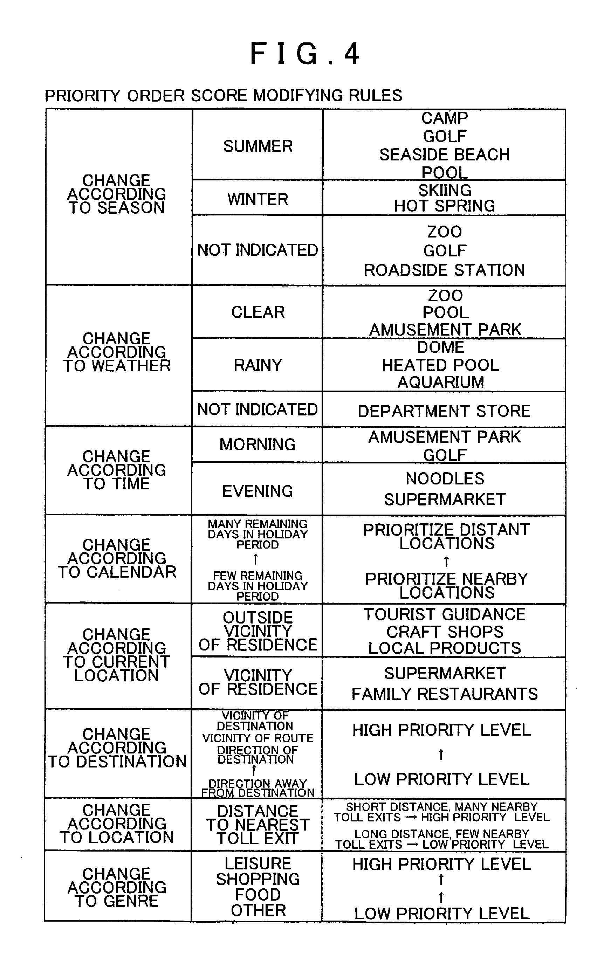

In FIG. 1, the rules that modify the priority level of each keyword are set in the priority order score modifying rules file 59. FIG. 4 shows an outline of the priority order score modifying rules. Modifying rules based on a time element, a place element, a weather element, and a destination element and the like during searches are used as priority order score modifying rules. These modification rules may be all applied, and in the state in which all can be used is set as the default, applicable items may be selected in accordance with the preferences of the user. Thereby, it is possible to display a list of the destination candidates (candidate locations) in a sequence that accords with the preferences of each user. Furthermore, by using a structure in which the user can suitably select the keywords for which the priority order (score) for each of the items is increased or decreased, it is possible to create an ordering that accords more closely with the preferences of the user.

As shown in FIG. 4, if the season at the time of the search is summer, the priority order scores of candidate locations (destinations) that include keywords that are associated with camps, golf, swimming beaches, and pools are increased. Similarly, if the season is winter, the candidate locations that include keywords that are associated with skiing and hot springs are increased. In the case in which the season is not indicated, candidate locations that include keywords that are associated with zoos, golf, roadside stations (along the traveled route) are increased. Note that no indication is applied in the case in which the user has selected to disable the mode that modifies the score (similarly below).

In addition, if the weather is clear, the priority order scores for candidate locations that include keywords that are associated with zoos, pools, and amusement parks are increased. If the weather is rainy, priority orders of the candidate locations that include keywords that are associated with domed facilities, heated pools, and aquariums are increased. In the case that there is no indication, the priority orders of candidate locations that include keywords that are associated with department stores are increased.
It is possible to determine the weather based on the output of various sensors. For example, the weather can be determined based on an illuminometer, sensors that detect rain, the drive signal for the windshield wipers, and the time and the like.

In the case in which it has been determined to be morning based on the current time, the priority order scores of locations that include keywords related to amusements parks and golf are increased, and in the case in which it is determined to be evening, the priority order scores of locations that include keywords related to noodle restaurants and supermarkets are increased.

In addition, in the case of, according to a calendar, the day before a holiday period and the day during a holiday period, locations that are distant from the current position are prioritized to the degree that the number of days remaining during the holiday period is high and locations in the vicinity of the current position are prioritized in the case in which the number of remaining days is low, thereby, the priority order of the candidate locations is increased. For example, in the case in which the current location is Nagoya, if the day is the first day of a holiday period, the priority order of candidate locations that include keywords related to land, sea, and the like which are distant locations, is increased, and in the case in which the holiday period is ending or that the day is a weekday, the priority order of candidate locations that include keywords related to stores and shops and the like, which are locations in the vicinity of the current position, is increased.

In addition, in the case that the current location is the vicinity of the registered residence of the driver (within 100 km of the residence), the priority order of candidate locations that include keywords related to supermarkets and family restaurants are increased. In contrast, in the case in which the current location is outside the immediate vicinity of the driver's residence, the priority order of candidate locations that include keywords related to tourist guidance, craft shops, and local products is increased.

In addition, in the case in which the destination has been set, the priority order of the candidate locations that are present in the vicinity of the destination, in the vicinity of the travel route that has been retrieved to the set destination, or in the direction of the destination is increased. In contrast, the priority order of candidate locations that are present in the direction that is away from the destination is lowered (a minus score).

In addition, the priority order of the candidate locations is increased according to the degree that the distance from the location of the candidate location to the nearest toll exit is short, or according to the degree that the number of the nearest toll exits is large. In contrast, the priority order of the candidate locations is decreased according to the degree that the distance from the location of the candidate location to the nearest toll exit is long, or according to the degree that the number of the nearest toll exits is low. In addition, in the case in which a genre has been selected, the priority order is increased in the sequence food, shopping, and leisure, and the priority level of the other genres is decreased.

As an example of other modifying rule, the priority order is increased according to the degree that the number of input characters and the number of characters besides the selected keywords (the number of remaining characters) is small. For example, in the case in which the keywords "Sagami" and "children" are selected, the priority order is increased according to the degree that the number of remaining characters, excluding "Sagami children", is low. As a result, the destination candidates are given in the priority order: "Sagami Children's Sea", "Sagami Children's Land", and "Sagami Children's Land Train Station".

In the priority order score modifying rules described above, in the case in which the score is to be increased, a predetermined score m (for example, m = 5) is added, and in the case that the score to be decreased, a predetermined score m is subtracted. As an example of a score before subtracting a predetermined score m, the priority level of keywords that are contained in the destination data of the candidate locations is used. In the case that there is a plurality of keywords, the highest score after the priority level has been changed is used. In addition, the priority level of candidate locations for which keywords have not been set is 50.

The modifying rules in FIG. 4 are examples, and a determination is carried out for one or more rules among these. The object to be determined may be determined in advance, or may be selected by the user. Each of the rules that are an object of determination is determined independently from the other rules.

In the navigation apparatus having the structure described above, the route guidance is carried out in the following manner. The navigation apparatus detects the current position by using the current position detecting section 10, and the map information on the vicinity of the current position is read from the map data file 51 of the information storing section 50 and displayed on the display 42. Then, when the destination has been set by the destination setting process, which will be described below, the information processing and controlling section 20 carries out a search (computation) for a plurality of candidates for travel routes from the current position to the destination, and displays the results on the map that has been displayed in the display 42. When the driver has selected any the travel routes, the selected travel route is stored in the RAM 24 (the travel route acquiring unit), and thereby the travel route is acquired.

Note that the information processing and controlling section 20 may transmit the current position of the vehicle (or the input departure point) and the destination to an information processing center, and the travel route may be acquired by receiving a travel route to the destination that has been retrieved at the information processing center. In this case, the communication of the travel route to the destination is carried out by wireless communication via the communication interface 25.

When the vehicle is traveling, the route guidance is carried out by tracking the current position that has been detected by the current position detecting section 10. The route guidance specifies the vehicle position on the map by map matching of the road data that corresponds to the retrieved travel route and the current position that has been detected by the current position detecting section 10, displays the maps of the vicinity of the current position of the vehicle on the display 42, and displays the retrieved travel route and the current position on the map. In addition, based on the relationship between the retrieved travel route and the current position, the necessity of guidance is determined. That is, in the case in which straight travel continues for a predetermined distance or greater, it is determined whether or not guidance about the travel route at predetermined course change points and the like, and directional guidance, are necessary. In the case in which travel guidance is necessary, guidance using a display on the display 42 or audio is executed.

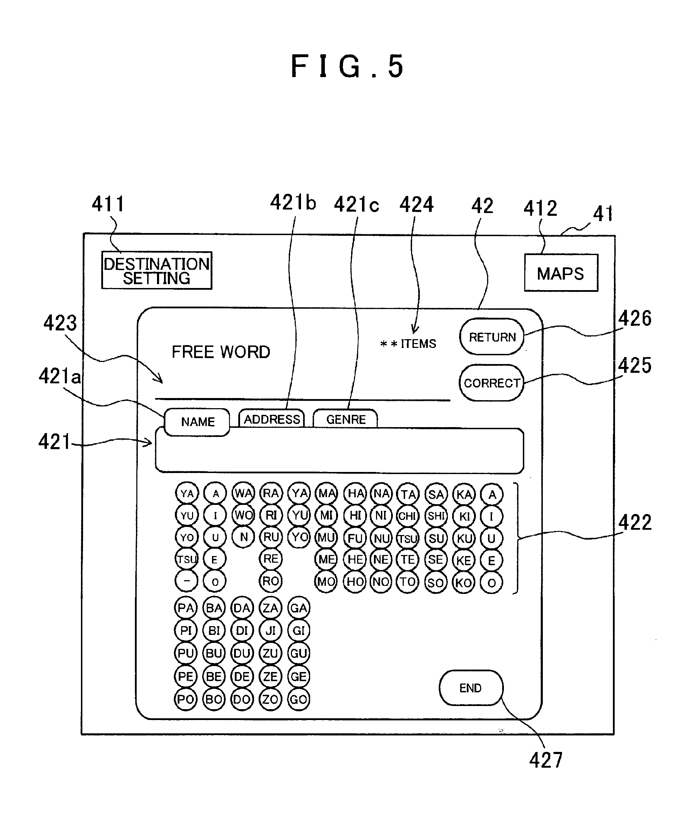

Next, the destination setting process according to the present embodiment will be explained. FIG. 5 is a drawing that shows the input device 41 and the display 42. As shown in FIG. 5, various menu screens such as the screen for setting the destination and the map screen of the vicinity of the current location are displayed on the display 42, and a touch panel that enables pointing by direct contact by using a finger is provided on the display screen (display). On the outer edge of the display 42, a fixed box for the input device 41 is disposed, and a destination setting key 411, which is structured by a physically existing push button (hard key), and a map key 412 for displaying the map screen of the vicinity of the current location are provided on the upper area of this fixed box.

The destination setting key 411 is a key for displaying the destination setting screen in which the destination and the transit points and the like (below, referred to together as the "destination") are set. When this destination setting key 411 is selected, the destination setting processing according to the present embodiment is carried out. Not that in addition to being used for route searches, the destination that is set by using the destination setting processing according to the present embodiment is used in the case in which a determined destination and a candidate destination in the vicinity of the current location are displayed on a map screen.

The display 42 in FIG. 5 displays the screens for the state in which the destination setting screen is displayed. A keyword column 421, an input keyboard 422, an input character column 423, a candidate number column 424, a correction key 425, a return key 426, and an end key 427 are displayed on this destination setting screen. The keywords (including associated keywords) that have been narrowed down according to the input characters are displayed on the keyword column 421. The keywords that are displayed in the keyword column 421 are displayed as input keys, and it is possible to select the keywords by touching the displayed keyword. Note that the keywords and the associated keywords are displayed such that they can be distinguished. In the keyword column 421, keyword columns for names, addresses, and genres are present, and by selecting the name tab 421a, the address tab 421b, and the genre tab 421c, the keyword columns that correspond to the selected tabs and the narrowed down keywords are displayed on the top.

The input keyboard 422 is structured by each of the keys for inputting 50 characters. Note that a numerical keypad or function keys may be displayed. The input character column 423 displays input characters that have been input by the input keyboard 422, and the keywords that have been selected from the keyword column. The input characters and the keywords are displayed such that they can be distinguished. The number of the candidate locations (destination data) that have been narrowed down by the input characters and the keywords that are displayed in the input character column are displayed in the candidate number column 424. The correction key 425 is a key for correcting an input character or a selected keyword. The return key 426 is a key for returning to the state prior to the last operation. The end key 427 is a key for displaying in a list the candidate locations for the destinations that have been narrowed down by the input of the characters and the selection of keywords. Note that, as shown in FIG. 5, in the destinations setting screen, a "free word" is displayed on the upper left, and this display denotes not only to input from the first letter of the notation for a destination, but also to be capable of freely inputting in correspondence to keywords and associated keywords.

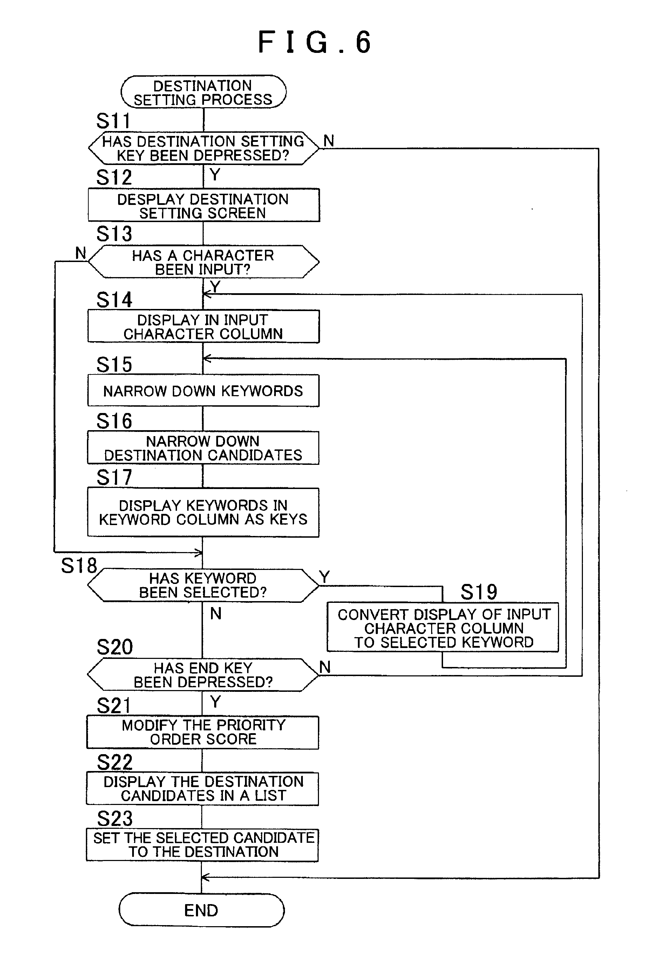

FIG. 6 is a flowchart that shows the content of the destination setting process. Note that in the flowchart that is shown in FIG. 6, the cases in which the correction key 425 and the return key 426 are depressed as operations in the setting of the destination are not included. Both the correction key 425 and return key 426 can be depressed at any point in time until the end key 427 has been depressed. When the correction key is 425 is depressed, the correction processing is executed, and when the return key 426 is depressed, the processing that returns to the previous operation is executed. These processes may be separate routines.

The information processing and controlling section 20 monitors whether or not the destination setting key 411 has been pressed (selected) by the user (step 11). When pressing of the destination setting key 411 has been detected (step 11; Y), the information processing and control apparatus 20 displays the destination setting screen that is shown in FIG. 5 (step 12), and monitors whether or not characters have been input from the input keyboard 422 (step 13). In the case in which characters have been input (step 13; Y), the information processing and controlling section 20 displays the input characters in the input character column 423 (step 14). From among all of the keywords in the keyword data file 58, the keywords that partially match the characters (character string) displayed in the input character column 423 are narrowed down (step 15). The narrowing down of these keywords is carried out for each of the name, address, and genre keywords, and stored in a specified area of the RAM 24.

Next, the information processing and controlling section 20 narrows down the destination candidates (candidate locations) by using the input characters, which are shown in the input character column, and the narrowed-down keywords, and stores the results in the RAM 24. The number of the narrowed-down destination candidates is displayed in the candidate number column 424 (step 16). In the narrowing down of the destination candidates by using the input characters, the search keys (reading of the name; refer to FIG. 2) for the destination data that partially matches the input characters (one or more characters) displayed in the input character column are narrowed down. In contrast, in the narrowing down by using keywords, the destination data, in which any one among all of the keywords that have been narrowed down in step 15 is contained, is narrowed down. The relationship between the input characters and the keywords is an AND condition, and the destination data that has been narrowed down by using the input characters and the keywords is stored in the RAM 24 as destination candidates.

Note that with respect to the targets of the narrowing down of the destination candidates, narrowing down is carried out by using the destination data file 56 as a target when the first single character is input, and thereafter, narrowing down is carried out by using as targets the destination candidates that are stored in the RAM 24. In the case of narrowing down in which the RAM 24 is the target, destination candidates other than those that have been narrowed down are deleted. Note that for the destination candidates that have been narrowed down, not all the destination data is contained in the RAM 24and an ID for the destination data may be stored in the RAM 24 as narrowed-down destination candidates. In this context, in the case in which further narrowing down is carried out, narrowing down is carried out while referring to the destination data, which corresponds to the ID in the RAM 24, from the destination data file 56.

Next, the information processing and controlling section 20 displays the keywords that have been narrowed down in the keyword column 421 as selectable keywords (step 17). Keywords that correspond to the tabs 421a to 421c, which are displayed on the top, are displayed in this keyword column 421. In addition, in the keyword column 421, although keywords that partially match the input characters or the selected keywords are narrowed down and displayed, in the case in which the number of keywords that have been narrowed down is equal to or less than a prescribed display object number, the associated keywords for these keywords are also displayed.

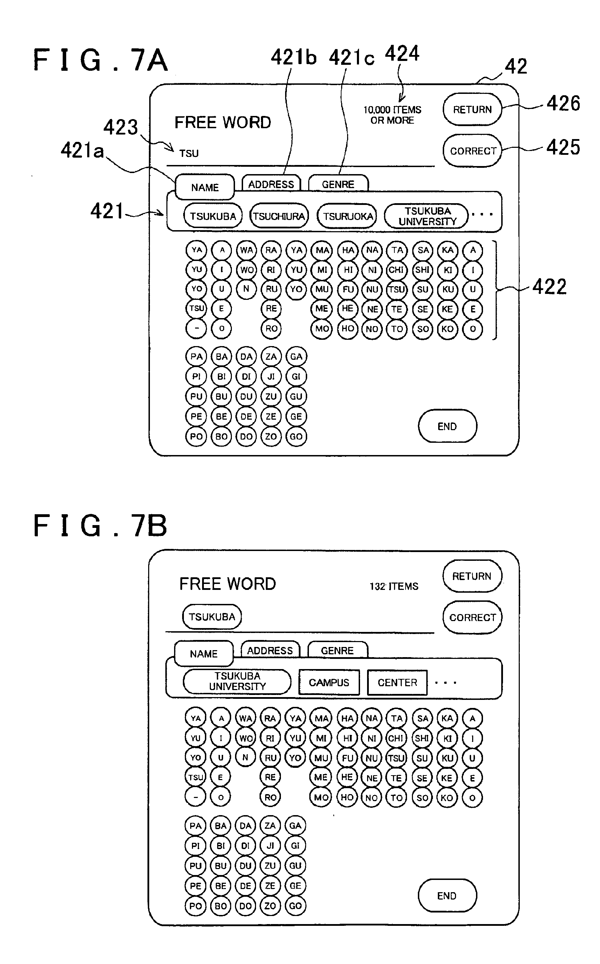

FIGS. 7A and 7B illustrate the display state of the destination setting screen in the processing that follows step 17. FIG. 7A is the destination setting screen after the characters "tsu" have been input from the input keyboard 422. The input characters "tsu" are displayed in the input character column 423 (step 14), and the keywords (name) "Tsukuba", "Tsuchiura", "Tsuruoka", "Tsukuba University", which correspond to and partially match the input characters "tsu", are narrowed down (step 15), and displayed in the keyword column 421 of the name tab 421a (step 17).

In this destination setting screen in FIG. 7A, when the address tab 421b is touched, the address keyword column 421 is displayed on the top, and the narrowed-down address keywords that correspond to the input characters "tsu" are displayed.

In step 17, the information processing and controlling section 20 changes the priority level of each keyword based on current conditions (the corresponding season, weather, time, type, region and the like) when the narrowed down keywords are displayed in the keyword column 421. In addition, the keywords are displayed in the keyword column 421 in a sequence starting from those with the highest priority level after the change. In FIG. 7A, although the keyword "Tsukuba University" is displayed before "Tsuchiura" and "Tsuruoka" when using Japanese alphabetic order, "Tsuchiura" and "Tsuruoka", which have high priority levels (refer to FIG. 3) are displayed first. In this manner, by changing the display order of the keywords based on the priority level, it is possible to display keywords that accord with the preferences of the user. In particular, in the case in which the current conditions include summer, morning, and clear weather, by increasing the priority levels of the keywords related to, for example, pool and beach, it is possible to prioritize and display keywords that better accord with the preferences of the user.

Returning to FIG. 6, next the information processing and controlling section 20 monitors the next input (selection) (steps 18, 20). When a keyword in the keyword column 421 has been selected (step 18; Y), the information processing and controlling section 20 changes the input characters that are displayed in the input character column 423 to a selected keyword (step 19). In this case, if other keyword has already been displayed in the input character column 423 due to a prior operation, the newly selected keyword is displayed after this keyword. Note that, as shown in FIG 7B, this keyword is displayed in a box in order to distinguish it from the input character.

After the keyword has been displayed in the input character column 423, the information processing and controlling section 20 returns to step 15, and carries out the narrowing down of the selected keyword (step 15) and the narrowing down of the destination candidates (step 16).
In step 15 following step 19, keywords that include keywords that have been selected from among the already narrowed-down keywords that are stored in the RAM 24 (step 15 after step 14) are narrowed down. The keywords that are not a target of narrowing down are deleted. For example, in FIG. 7A, in the case in which the keyword "Tsukuba" has been selected, this is narrowed down to "Tsukuba University", and "Tsuchiura" and "Tsuruoka" are deleted from the keywords.

Next, the information processing and controlling section 20 displays the keywords that have been narrowed down in step 15 in the keyword column after further narrowing down the destination candidates that are stored in the RAM 24 by using the selected keywords (step 16). FIG. 7B shows the destination setting screen in this state. Specifically, the destination setting screen in FIG. 7A shows the destination setting screen after the keyword "Tsukuba" has been selected. In the input character column 423, the selected keyword "Tsukuba" is displayed in the box instead of the input characters "tsu", and the further narrowed down keyword "Tsukuba University" is displayed in the keyword column 421. Next, in FIG. 7B, because keyword that includes "Tsukuba" is only one, that is, "Tsukuba University", the associated keywords "campus" and "center", which are associated with the selected keyword "Tsukuba", are displayed. Note that in the case in which the associated keywords for the selected keyword are equal to or less than a prescribed number even after being displayed, the associated keywords for the keywords that have been narrowed down are also displayed. In the case in which the associated keywords are displayed, the associated keywords are displayed along with the keywords in the sequence starting from those with the highest priority level after the priority levels have been changed based on the current conditions (the time and place and the like). Note that the keywords displayed in the keyword column and the associated keywords are displayed in elongated circular boxes and in rectangular boxes, respectively, such that both can be distinguished.

Returning to FIG. 6, in the case in which characters have been input (step 18; N, step 20; N), the information processing and controlling section 20 returns to step 14 and carries out the processing following the display of the input characters (step 14). In contrast, in the case in which the end key 427 has been selected (step 20; Y), the information processing and controlling section 20 changes the priority order scores for the destination candidates (destination data) that have been narrowed down in step 16 and stored in the RAM 24 according to the priority order score modifying rules that are exemplified in FIG. 4 (step 21). The priority level of the keyword that corresponds to the destination candidate (destination data) is used as a score of the priority order score before the change, and a predetermined score (for example, 50) that has been determined in advance is used as the score of a destination candidate for which a keyword is not present.

Next, the information processing and controlling section 20 displays the destination candidates in a list in the destination setting screen in a sequence starting from those with the highest changed priority order scores (step 22), sets the destination candidate that the user has selected from among the displayed destination candidates as the final destination (step 23), stores the final destination in a predetermined area of the RAM 24, and then ends the processing.

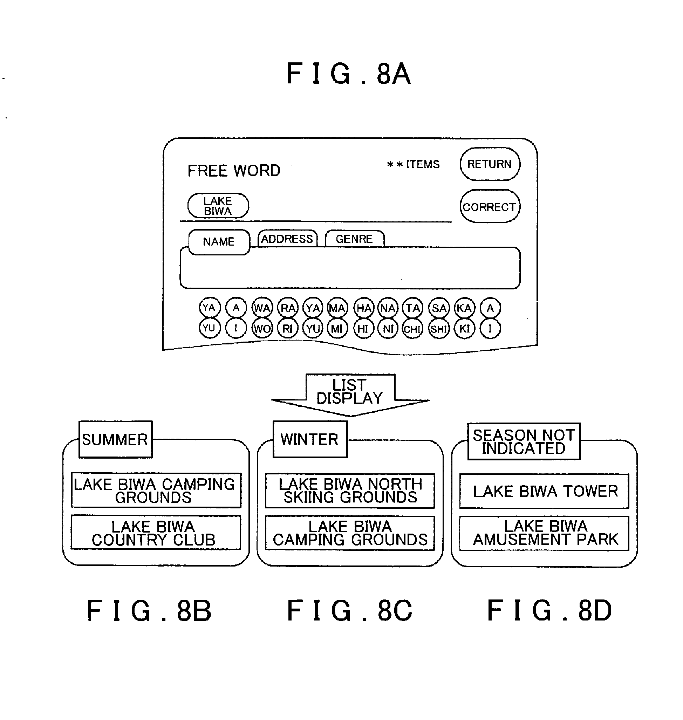

In FIG. 8 to FIG. 15B illustrate the differences between the destination candidates that are displayed in a list according to a score that has been changed according to the priority order score modifying rules in FIG. 4. FIGS. 8A, 8B, 8C, and 8D represent the differences in the display of the list in the case in which a modifying rule that changes the priority order score according to the season is applied as the priority order score modifying rule. FIG. 8A shows the state in which the keyword "Lake Biwa", which has been selected in the input character column 423, has been displayed. When the end key 427 is selected in this state, if the current season is summer, according to the rule that increases the priority order score of the candidate locations (destinations) that include keywords that are related to camps, golf, seaside beaches, and pools, the score of the narrowed-down destination candidates that have been stored in the RAM 24 are changed, and as a result, as shown in FIG. 8B, a list is displayed in the sequence: "Lake Biwa Camp Sites", "Lake Biwa Country Club" and the like. Similarly, if the season is winter, as shown in 8C, a list is displayed in the sequence: "Lake Biwa North Skiing Grounds", "Lake Biwa Camping Grounds" and the like. If the season is not indicated, as shown in FIG.8D, a list is displayed in the sequence: "Lake Biwa Tower", "Lake Biwa Amusement Park" and the like.

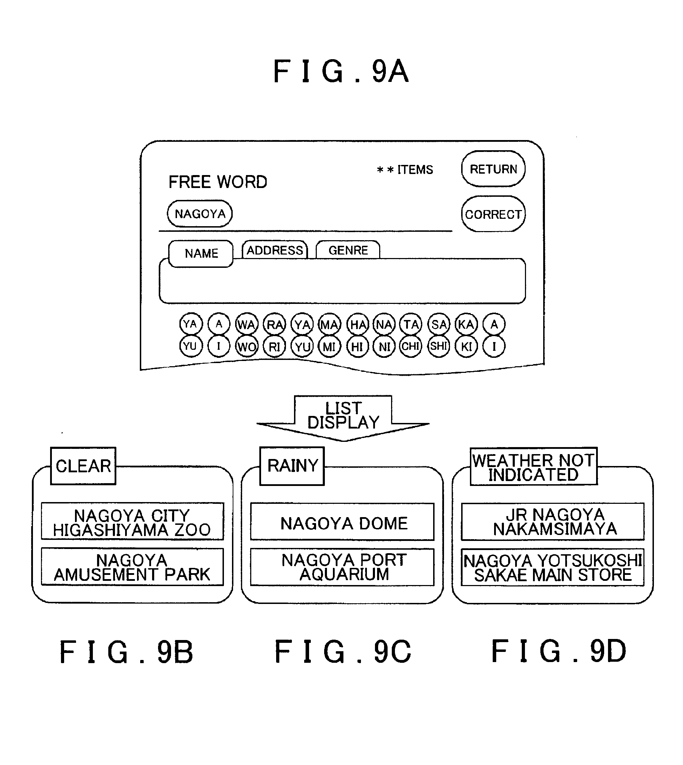

FIGS. 9A, 9B, 9C and 9D show the differences between the display of the lists in the case in which a modifying rule for changing the priority order score according to the weather is applied as the priority order score modifying rule. As shown in FIG. 9A, when the end key 427 has been selected in the state in which the selected keyword "Nagoya" is displayed, if the current weather is clear, as shown in FIG. 9B, a list is displayed in the sequence "Nagoya City Higashiyama Zoo", "Nagoya Amusement Park", according to a rule that increases the priority order score of the candidate locations (destinations) that include keywords associated with zoos, pools, and amusement parks. Similarly, if the current weather is rainy, as shown in FIG. 9C, a list is displayed in the sequence "Nagoya Dome", "Nagoya Port Aquarium", and the like, and if the weather is not indicated, as shown in FIG. 9D, a list is displayed in the sequence "JR Nagoya Nakashimaya", "Nagoya Yotsukoshi Sakae Main Store", and the like.

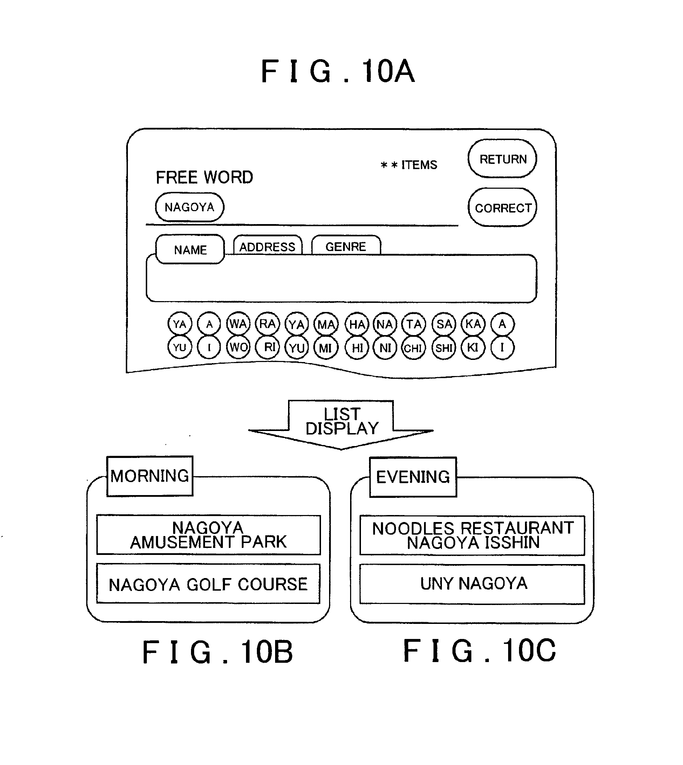

FIGS. 10A, 10B, and 10C show the differences between the display of lists in the case in which a modifying rule for changing the priority order score according to the time is applied as the priority order score modifying rule. As shown in 10A, when a end key 427 is selected while the selected keyword "Nagoya" is displayed, if the current condition is morning, a list is displayed in the sequence "Nagoya Amusement Park", "Nagoya Golf Course" and the like, according to a rule that increases the priority order score of the candidate locations (destinations) that include keywords related to amusement parks and golf, as shown in 10B. Similarly, if the current time is evening, as shown in 10C, a list is displayed in the sequence "Noodles Restaurant, Nagoya Isshin", "Uny Nagoya" and the like.

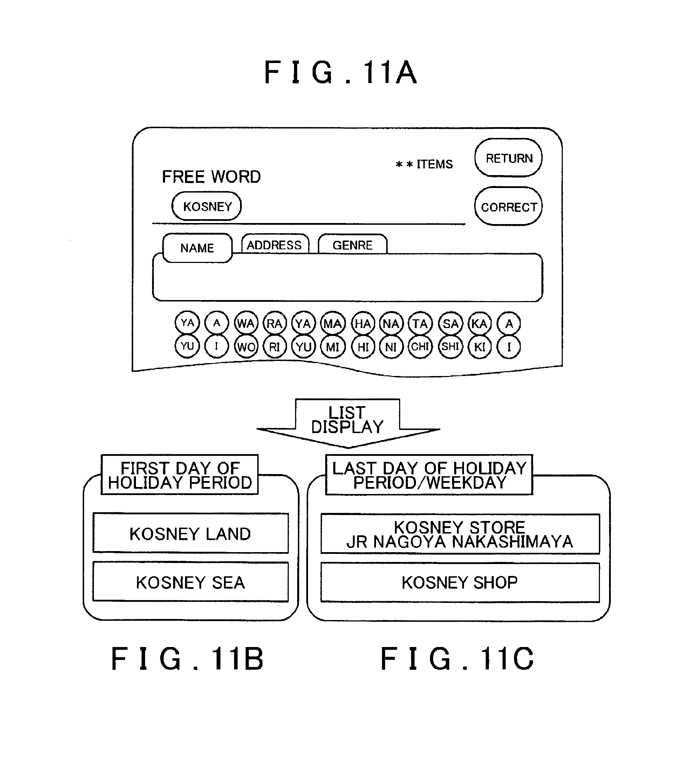

FIGS. 11A, 11B, and 11C show the differences in the display of the lists in the case in which a modifying rule that changes the priority order score according to the calendar is applied as the priority order score modifying rule. As shown in FIG. 11A, when a end key 427 is selected while the selected keyword "Kosney" is displayed, if the day is the first day of a holiday period, according to the priority order score modifying rule, as shown in 11B, a list is displayed in the sequence "Kosney Land", "Kosney Sea" and the like, which are far from the current position. Similarly, in the case in which the day is the last day of a holiday period or a weekday, as shown in 11C, a list is displayed in the sequence, "Kosney Store JR Nagoya Nakashima", "Kosney Shop", and the like, which are locations in the vicinity.

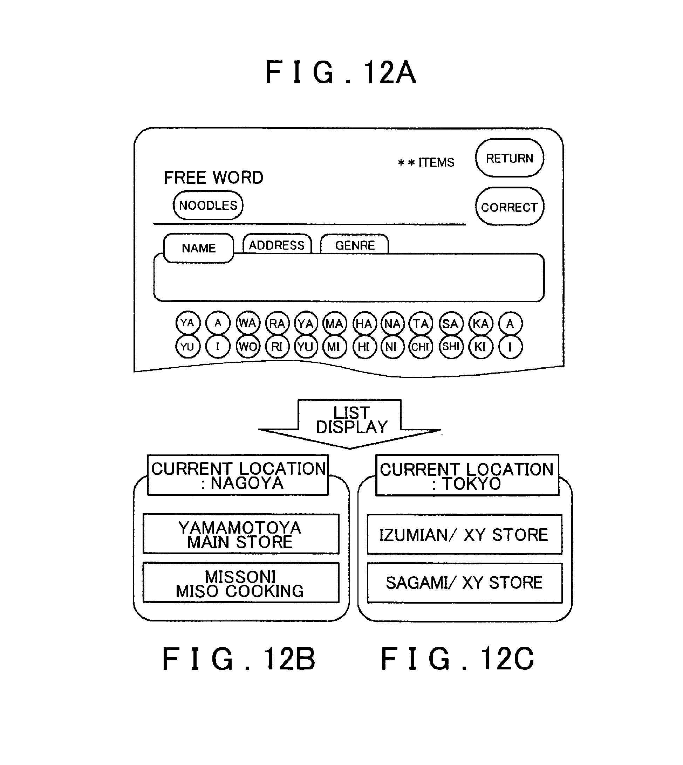

FIGS. 12A, 12B, and 12C show the differences in the display of lists in the case in which a modifying rule that changes the priority order score according to the current location is applied as the priority order score modifying rule. As shown in FIG. 12A, when a end key 427 is selected while the selected keyword "noodles" is displayed, in the case in which the registered residence is in Tokyo, if the current location of the vehicle is Nagoya, the vehicle is not in the vicinity of the residence, and thus, as shown in FIG. 12B, a list is displayed in the sequence "Yamamotoya Main Store", "Missoni Miso Cooling" and the like, which include keywords related to tourist guidance, craft shops, and local products. Similarly, if the current location is Tokyo, the vehicle is in the vicinity of the residence, and thus, as shown in FIG. 12C, a list is displayed in the sequence "Izumian/ XY Store", "Sagami/ XY Store" and the like, which include keywords related to supermarkets and family restaurants.

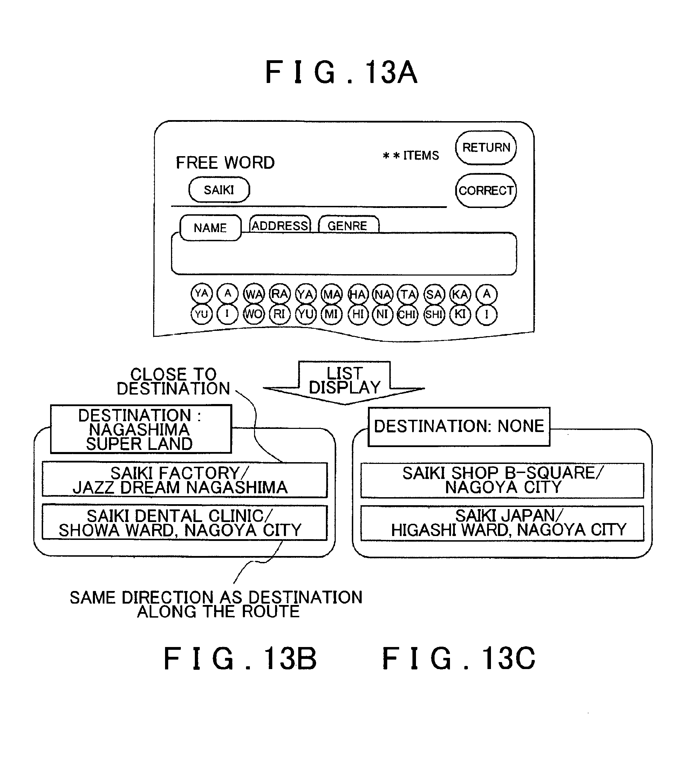

FIG. 13A, 13B,and 13C represent the differences in the display of the lists in the case in which a modifying rule that changes the priority order score according to the destination is applied as the priority order score modifying rule. As shown in FIG. 13A, when a end key 427 is selected while the selected keyword "Saiki" is displayed, if Nagashima Superland has already been set as the destination, according to the priority order score modifying rule that prioritizes the vicinity of the destination, the vicinity of the route, and the direction of the destination, as shown in FIG. 13B, a list is displayed in the sequence, "Saiki Factory/ Jazz Dream Nagashima", which is close to the destination, "Saiki Dental Clinic/ Showa Ward, Nagoya City", and the like, which is in the same direction as the destination. In contrast, if the destination has not been set, a list is displayed in the sequence "Saiki Shop B-Square/ Nagoya City", "Saiki Japan/ Higashi Ward, Nagoya City " and the like, which are present in the vicinity of Nagoya, which is the current location.

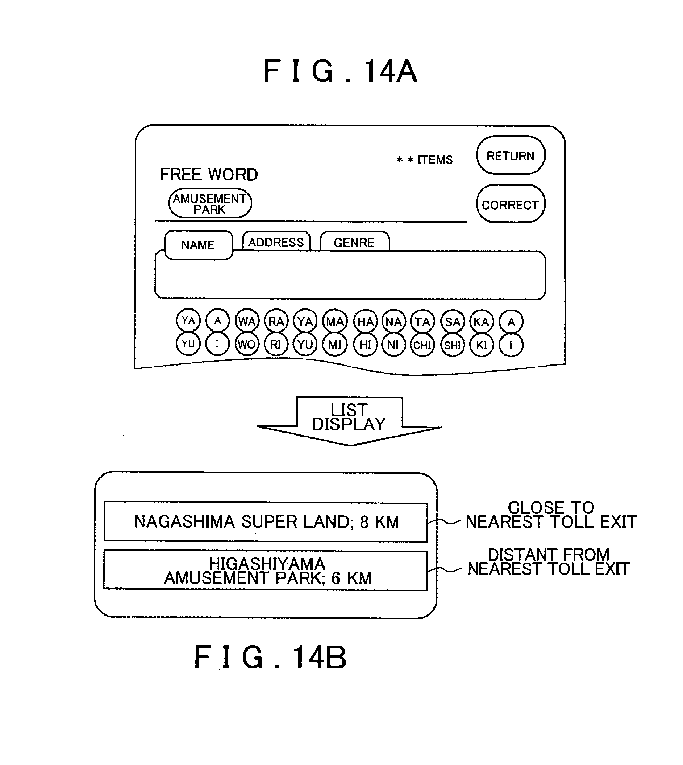

FIGS. 14A and 14B show the differences in the display of lists in the case in which a modifying rule that changes the priority order score according to the location is applied as the priority order score modifying rule. As shown in FIG. 14A, in the case in which the selected keyword is "amusement park", the residence is in Naka Ward, Nagoya City, and the current location is in Nagoya, as shown in FIG. 14B, "Nagashima Superland; 8 km", which is close to the nearest toll exit from the location of the destination candidate, "Higashiyama Amusement Part; 6 km", which is far from the nearest toll exit, and the like are displayed in that sequence. Note that the 8 km and the 6 km in the display of the list, are distances from the current position. Nagashima Superland, which, even though more distant from the current location, is shorter in distance from the toll exit, is prioritized and displayed.

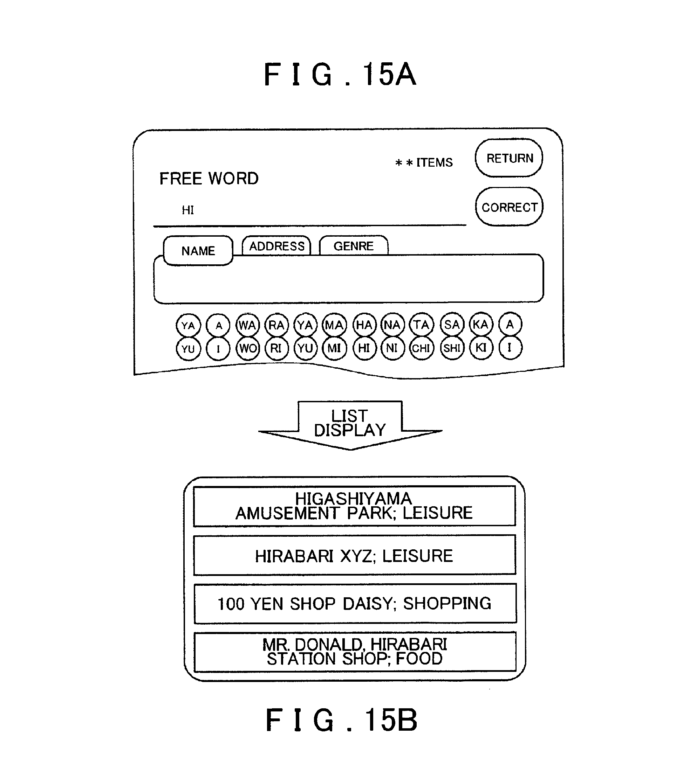

FIGS. 15A and 15B represent the differences in the display of the lists in the case in which a modifying rule that changes the priority order score according to the genre is applied as the priority order score modifying rule. In FIG. 15A, when a end key 427 is selected while the input characters "hi" have been input, in the case in which the registered residence is Naka Ward, Nagoya City, a list is displayed in the sequence: "Higashiyama Amusement Park; leisure", " Hirabari XYZ; leisure", "100 Yen Shop Daisy; shopping", "Mr. Donald Hirabari Station Shop; food" and the like, according to the score that increases the priority order score in the sequence of food, shopping, and leisure, as shown in FIG. 15B.

In this manner, by modifying the order of items in the list by applying priority order score modifying rules, it is possible to display a list of destination candidates in the order that accords better with the preferences of the user. In addition, it is possible to display lists that accord with the preferences of the user by modifying the priority order score modifying rules that are applied as described above and the keywords for the items to which the priority order score modifying rules are applied.

In the embodiment that has been explained above, an explanation was provided for the case in which the current conditions (corresponding season, corresponding weather, corresponding time, type, region) that modify the priority level of the keywords are contained in the keyword data file 58, and the rules for determining the list display order of the destination candidates are stored in the priority order score modifying rules file 59, but these may be contained in a shared file. In this case, the rules may be stored in either of the keyword data files or may be stored separately as modifying rules. In addition, they may be stored in the program.

In addition, in the embodiment that has been explained, an explanation was provided for the case in which the keywords are stored in the destination data, but an ID (identification number) may be appended to each of the keywords of the keyword data file, and the ID may be stored in the destination data. In addition, in the embodiment that has been explained, along with the storing of the keywords for the name, address, and genre, the narrowing down and display of keywords is carried out for each name, address, and genre, but it is possible to use any one or two among the name, address, and genre.

### [Second Embodiment]

In the first embodiment described above, a navigation apparatus was explained under the assumption that the country of use is Japan. Specifically, in the first embodiment, an explanation was provided for a navigation apparatus that has Japanese specifications in which the input keyboard 422 is structured by 50 alphabetic keys, which are the input unit for the Japanese language, and data that relates to destination searches within Japan is stored in the destination data file 56.
However, the environment in which the navigation apparatus is used is not limited to Japan. In other countries, it is possible to use an input function that uses the keyword data described above by associating the specifications of input apparatus 41 and each of the sets of data to a region.

Thus, in the second embodiment, as one example of a navigation apparatus for countries other than Japan, an explanation will be provided for a navigation apparatus having specifications for the United States (below, referred to as "US specifications").
The system structure of the navigation apparatus and the flow of the destination setting process that are used in the second embodiment are fundamentally identical to those that are used in the first embodiment.
In the explanation of the second embodiment, structures that are identical to those of the first embodiment have identical reference numerals appended, the explanations thereof are omitted, and the differing parts are explained.

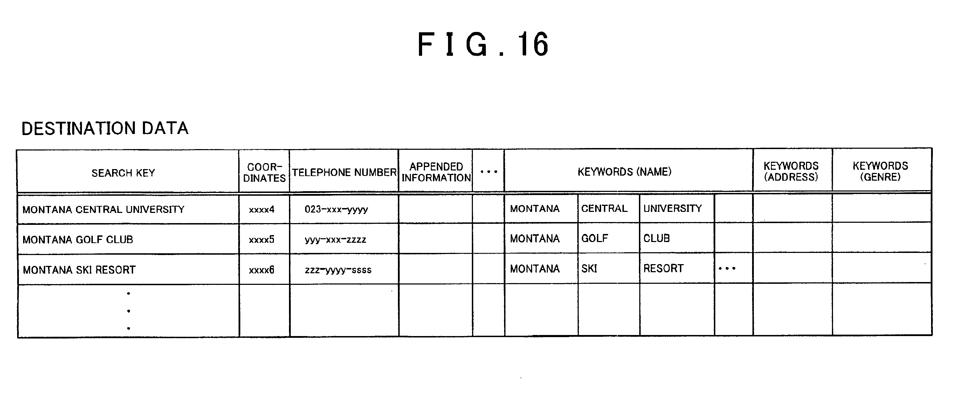

FIG. 16 schematically shows the content of the destination data (location information) that is stored in the destination data file 56.
As shown in FIG. 16, in the navigation apparatus according to US specifications, the name of the destination data is directly registered as a search key. In addition, the search keys according to US specifications are different from those of the Japanese specifications, and are separated by a space between each word.
The search key is the "name" of the destination, and this search key is compatible with the input apparatus (in the second embodiment, the alphabet keys of the touch panel), and both upper case letters and lower case letters are used together. However, searches are executed without distinguishing between upper case letters and lower case letters.
In the second embodiment, the names for the destination data in the United States are stored in the destination data file 56.

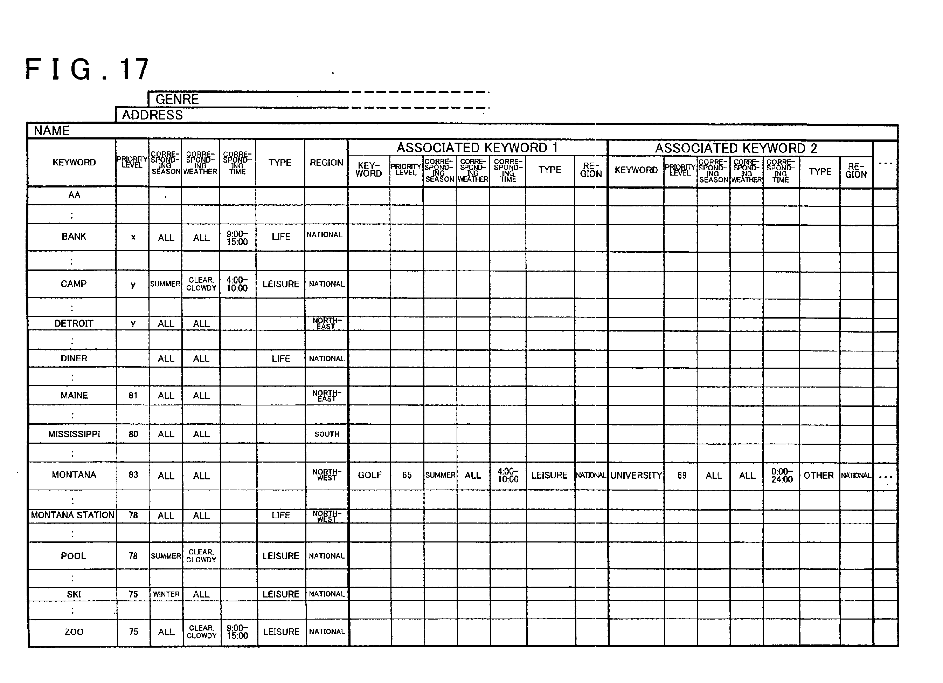

FIG. 17 schematically shows the content of the keywords that are contained in the keyword data file 58. Each of the keywords consists of words that form the name for each destination datum.
As shown in FIG. 17, in the navigation apparatus having US specifications as well, similar to the first embodiment, a priority level is determined for each of the keywords that are shown in the alphabet character string.
For example, the priority level of the location candidates that include the keyword "Montana" is set to "83", and the region is set to "northwest". Thus, if the current position is within the range of the northwest, a predetermined n points (for example, 3 points) are added to 83, and the priority level is changed to 86.
In addition, there are keywords for which associated keywords are set. For these keywords, words that have a high probability of being input as search words along with the keyword, for example, words that form a part of all of the notation of a destination along with the keyword, such as "golf" or "university" for the keyword "Montana" are set.

Note that the period of a corresponding season that is set in the keyword data file 58 is set so as to correspond to the country or region where the navigation apparatus is to be used. For example, in the case in which the country of use is Japan, the period from December to February is set as winter, and in the case in which the country of use is Australia, which is located in the southern hemisphere, the period from June to August is set as winter.
In addition, the corresponding times that are set in the keyword data file 58 are set so as to correspond to the country or region in which the navigation apparatus is to be used. For example, in a country or region that has introduced daylight savings time, the corresponding time is advanced by one hour during the summer.

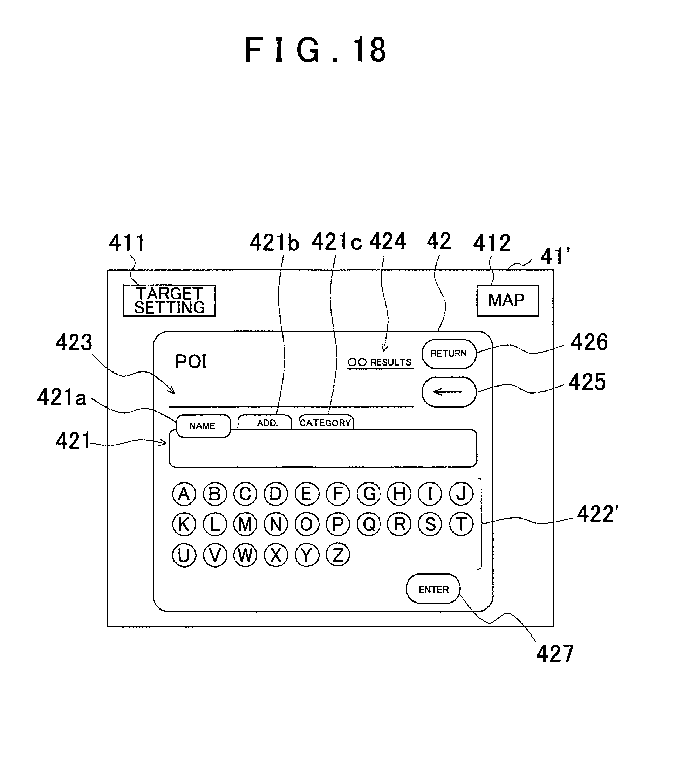

FIG. 18 shows the input apparatus 41' and the display 42 in the navigation apparatus that has US specifications.
In FIG. 18, in order to explain the navigation apparatus that has US specifications, English character notation is used, but identical reference numerals are appended to the keys and display areas having functions that are identical to those in the first embodiment (FIG. 5).
As shown in FIG 18, the input keyboard 422' is structured by keys for inputting the alphabetic characters A to Z.

In the navigation apparatus in which the specifications of the input apparatus 41 and each of the sets of data that are compatible with the US specifications, destination setting processing that is identical to that in the first embodiment (FIG. 6) described above is executed.
However, in the second embodiment, alphabetic characters (character strings) are input by using the input keyboard 422', and a destination data file 56 and a keyword data file 58 that have the US specifications described above are referenced.

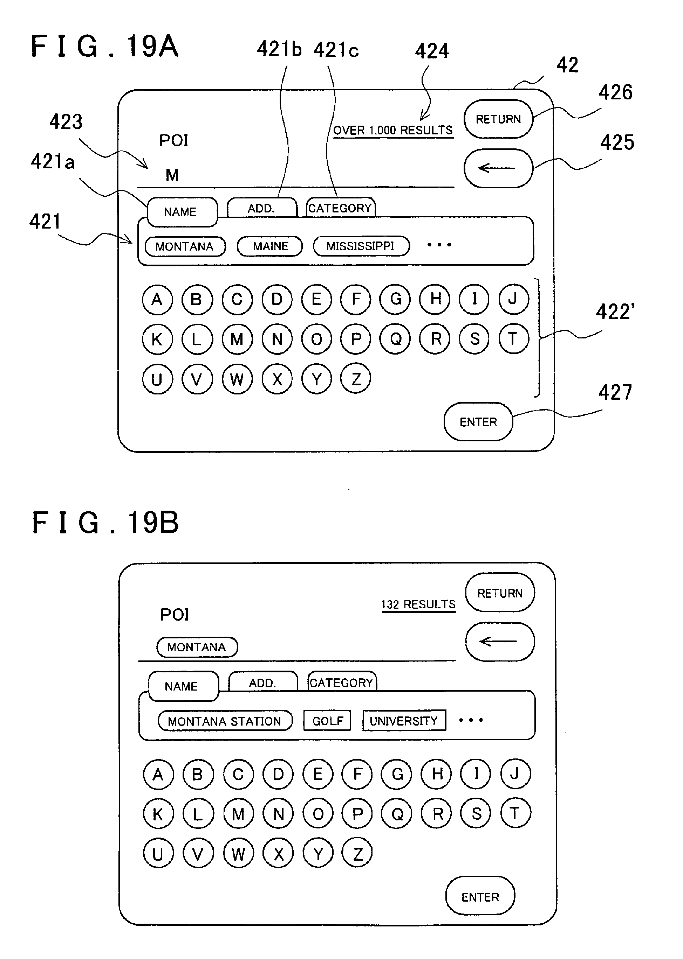

FIGS. 19A and 19B show an example of the display state of the destination setting screen in the processing following step 17 in the navigation apparatus that has US specifications.
FIG. 19A is the destination setting screen after the alphabet character "M" has been input from the input keyboard 422'. The input character "M" is displayed in the input character column 423, and at the same time, the keywords (names) that partially match the corresponding input character "M" are narrowed down to "Montana", "Maine", "Mississippi", and the like, and these are displayed in the keyword column 421 of the name tab 421a.
In the destination setting screen in this FIG. 19A, when the address tab 421b is touched, the address keyword column 421 is displayed on top, and the address keywords that have been narrowed down in correspondence to the input character "M" are displayed.

In the case in which the keywords that have been narrowed down are displayed in the keyword column 421 as selectable keys, similar to the first embodiment, based on the priority order score modifying rules (FIG. 4), the priority level of each keyword is modified based on the present state (corresponding season, weather, time, type, region, and the like). Thus, the keywords are displayed in the keyword column 421 in an order starting from the keyword that has the highest priority level after the priority level has been modified.
In FIG. 19A, in the case of the alphabetic order, the keyword "Maine" appears before "Mississippi" and "Montana", but "Montana", which has a high priority level (refer to FIG. 17), is displayed first.
In this manner, even in the navigation apparatus that has US specifications, by modifying the display order of the keywords depending on the priority level, it is possible to display the keywords that conform to the users' needs.

From the state shown in FIG. 19A, in the case in which the keyword "Montana" has been selected in the keyword column 421, the information processing control apparatus 20 changes the input characters that are displayed in the input character column 423 to "Montana", which has been selected. In this case, if other keywords are already being displayed in the input character column 423 due to previous operations, the newly selected keyword is displayed after this keyword.
In addition, the information processing control apparatus 20 carries out the narrowing down of the selected keywords and the narrowing down of the destination candidates.
For example, in the case in which the keyword "Montana" has been selected in FIG. 19A, the selection is narrowed down to "Montana", and the other words "Maine" and "Mississippi" are deleted from the keywords.

FIG. 19B is the destination setting screen after the keyword "Montana" has been selected in the destination setting screen in FIG. 19A.
As shown in FIG. 19B, in the input character column 423, the selected keyword "Montana" is displayed in the box instead of the input character "M". In addition, in the keyword column 421, the further narrowed-down keyword "Montana Station" and the associated keywords "golf" and "university", which are associated with the selected keyword "Montana", are displayed.
Note that in the case in which the associated keywords are displayed, similar to the first embodiment, the associated keywords and the keywords are displayed in a sequence starting from those that have the high priority levels after modification based on the current conditions (time, place, and the like).
In this manner, even in the navigation apparatus that has US specifications, similar to the first embodiment, while repeatedly selecting the keywords that have been displayed in a list, it is possible to carry out the search for a destination.

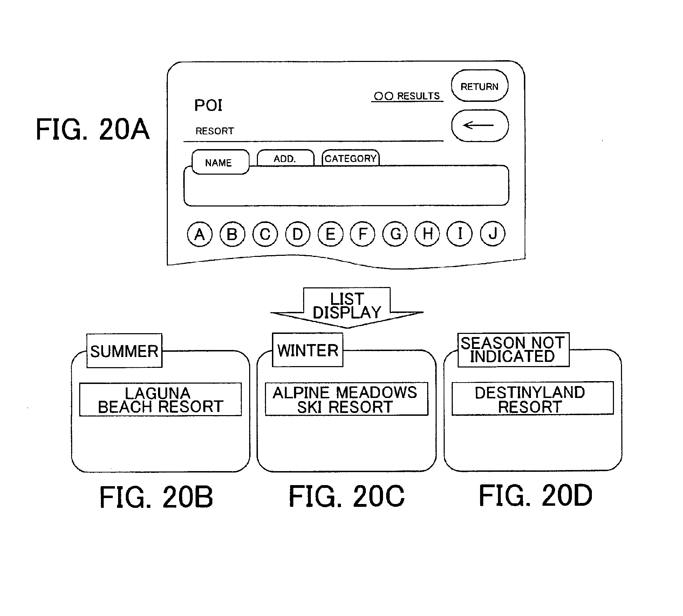

FIG. 20 to FIG. 27 show examples of the differences in the destination candidates that are displayed in a list depending on the scores that have been altered according to the priority order score modifying rules in FIG. 4 in the navigation apparatus that has US specifications.
FIG. 20 shows the differences in the display of the lists in the case in which a modifying rule that changes the priority order score according to the season is applied as a priority order score modifying rule.
FIG. 20A shows the state in which the keyword "Resort", which has been selected in the input character column 423, is displayed. In this state, when the end key (Enter) 427 is selected, similar to the first embodiment, according to a rule that increases the priority order score of the candidate points (destinations) that include the keywords that are associated with summer if the current condition is summer, the score of the narrowed-down destinations that are contained in the RAM 24 is changed, and as shown by results thereof FIG. 20B, the "Laguna Beach Resort" is displayed with in the list with priority.
Similarly, if the season is winter, as shown in FIG. 20C, "Alpine Meadows Ski Resort" is prioritized and displayed. If the season is not indicated, as shown in FIG. 20D, "Destinyland Resort" is prioritized and displayed.

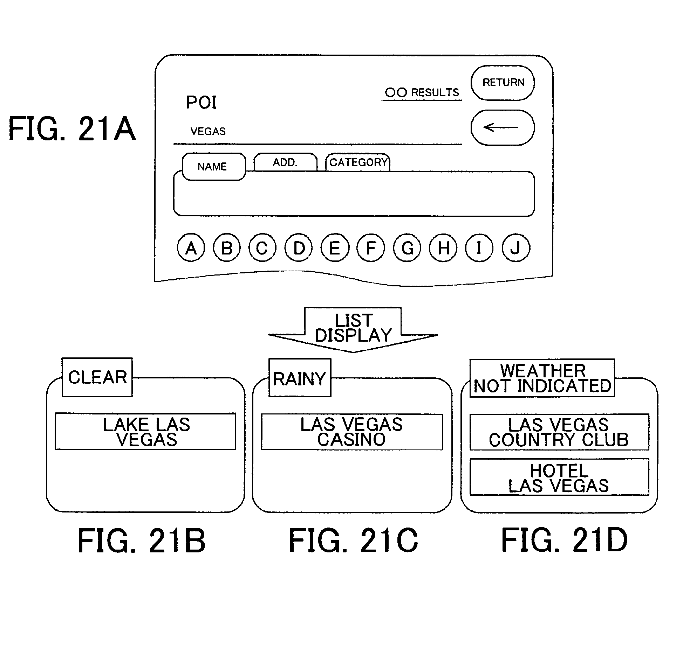

FIG. 21A to FIG. 21D show the differences in the display of the lists in the case in which a modifying rule that changes the priority order score according to the weather is applied as a priority order score modifying rule.
As shown in FIG. 21A, when the end key (Enter) 427 is selected while the keyword "vegas" has been input and displayed in the input character column 423, if the current condition is clear weather, based on the priority order score modifying rule, as shown in FIG. 21B, "Lake Las Vegas" is prioritized and displayed.
Similarly, if the current state is rainy, as shown in FIG. 21C, "Las Vegas Casino" is prioritized and displayed, and if the weather has not been indicated, as shown in FIG. 21D, a list is displayed in the order: "Las Vegas Country Club", "Hotel Las Vegas", and the like.

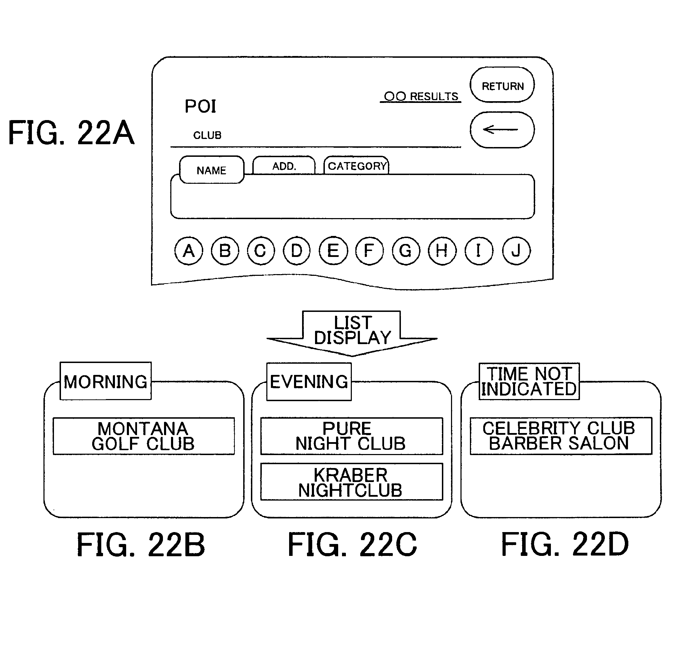

FIG. 22A to FIG. 22D show the differences in the display of the lists in the case in which a modifying rule that changes the priority order score according to the time is applied as the priority order score modifying rule.
As shown in FIG. 22A, when the end key (Enter) 427 is selected while the keyword "club" has been input and displayed in the input character column 423, if the current condition is morning, based on the priority order score modifying rule, as shown in FIG. 22B, "Montana Golf Club" is prioritized and displayed.
Similarly, if the current condition is evening, as shown in FIG. 22C, a list is displayed in the order "Pure Night Club", "Kraber Nightclub" and the like, and if the time has not been indicated, as shown in FIG. 22D, "Celebrity Club Barber Salon" is prioritized and displayed.

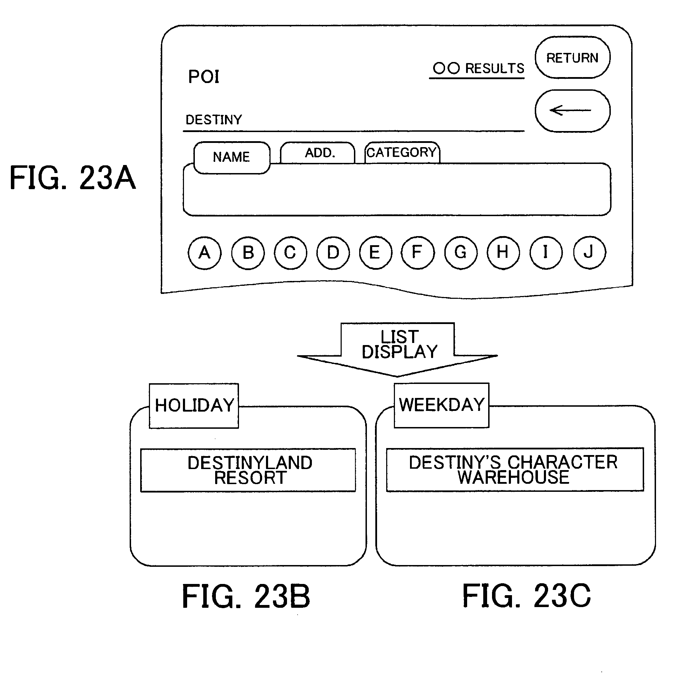

FIG. 23A to FIG. 23D show the differences in the display of the lists in the case in which a modifying rule that changes the priority order score according to the calendar is applied as a priority order score modifying rule.
As shown in FIG. 23A, when the end key (Enter) 427 is selected while the keyword "destiny" is input and displayed in the input character column 423, if the day is a holiday, according to the priority order score modifying rule, as shown in FIG. 23B, "Destinyland Resort", which is distant from the current position, is prioritized and displayed. Similarly, in the case in which the day is a weekday, as shown in FIG. 23C, "Destiny's Character Warehouse", which is a location nearby, is prioritized and displayed.

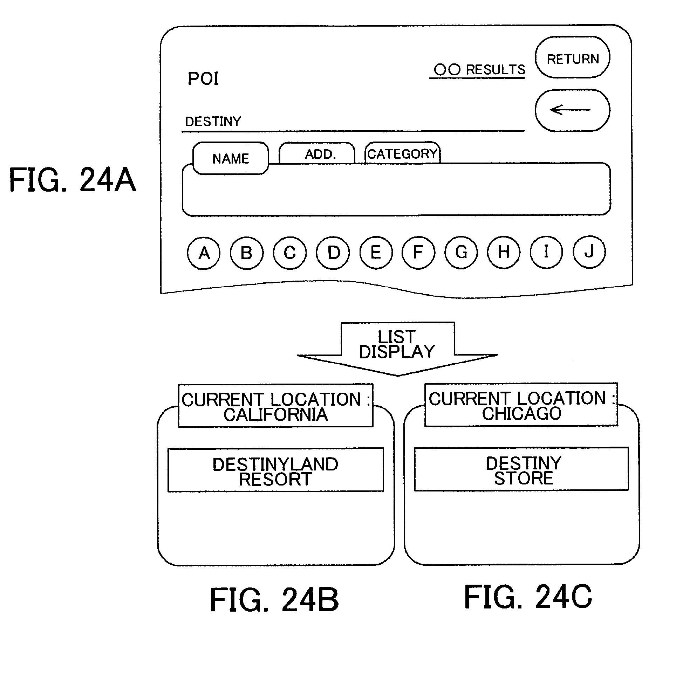

FIG. 24A to FIG. 24D show the differences in the display of the lists in the case in which a modifying rule that changes the priority order score according to the current position is applied as a priority order score modifying rule.
As shown in FIG. 24A, when the end key (Enter) 427 is selected while the keyword "destiny" has been input and displayed in the input character column 423, in the case in which the current position is California, as shown in FIG. 24B, "Destinyland Resort", which includes a keyword that is associated with California, is prioritized and displayed. Similarly, if the current position is Chicago, as shown in FIG. 24C, "Destiny Store", which includes a keyword that is associated with Chicago, is prioritized and displayed.

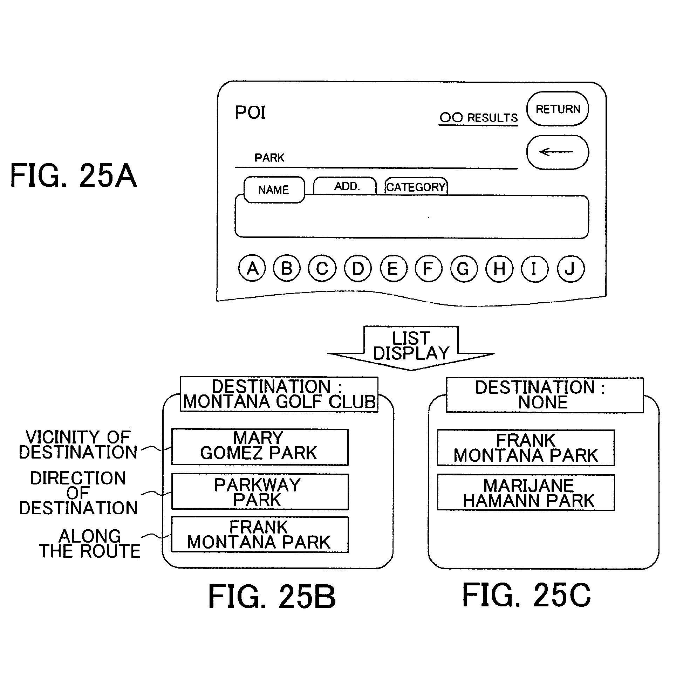

FIG. 25A and FIG. 25B shows the differences in the display list in the case in which a modifying rule that changes the priority order score according to the destination is applied as a priority order score modifying rule.
As shown in FIG 25A, when the end key (Enter) 427 is selected while the keyword "park" has been input and displayed in the input character column 423, if "Montana golf club" have already been set as a destination, due to the priority order score modifying rule that prioritizes the vicinity of the destination, the direction of the destination, and the proximity to the route, as shown in FIG. 25B, a list is displayed in the order: "Mary Gomez Park", which is near the destination, "Parkway Park", which is in the same direction as the destination, and "Frank Montana Park", which is along the route.
In contrast, if the destination has not been set, a list is displayed in the order: "Frank Montana Part", "Marijane Hamann Park" and the like, which are present in the vicinity of the current position.

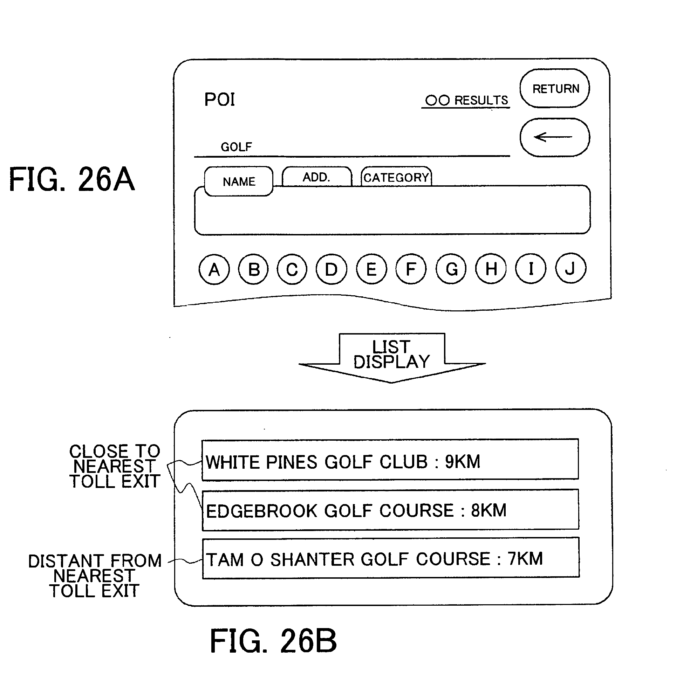

FIG. 26A and FIG. 26B show the differences in the display of the lists in the case in which a modifying rule that changes the priority order score according to the location is applied as a priority order score modifying rule.
As shown in FIG. 26A, when the end key (Enter) 427 has been selected while the keyword "golf" has been input and displayed in the input character column 423, as shown in FIG. 26B, a display is shown in the order: "White Pines Golf Club: 9km" and "Edgebrook Golf Course: 8km", which are close to the nearest toll exit for which the distance from the current position of the destination candidate to the nearest toll exit is short, and "Tam O Shanter Golf Course: 7km", which is distant from the nearest intersection.
Note that the "9 km", "8 km", and "7 km" that appear in the display of the lists are the distances from the current position. Even when distant from the current position, "White Pines Golf Club: 9 km", which is a short distance from the toll exit, will be prioritized and displayed.

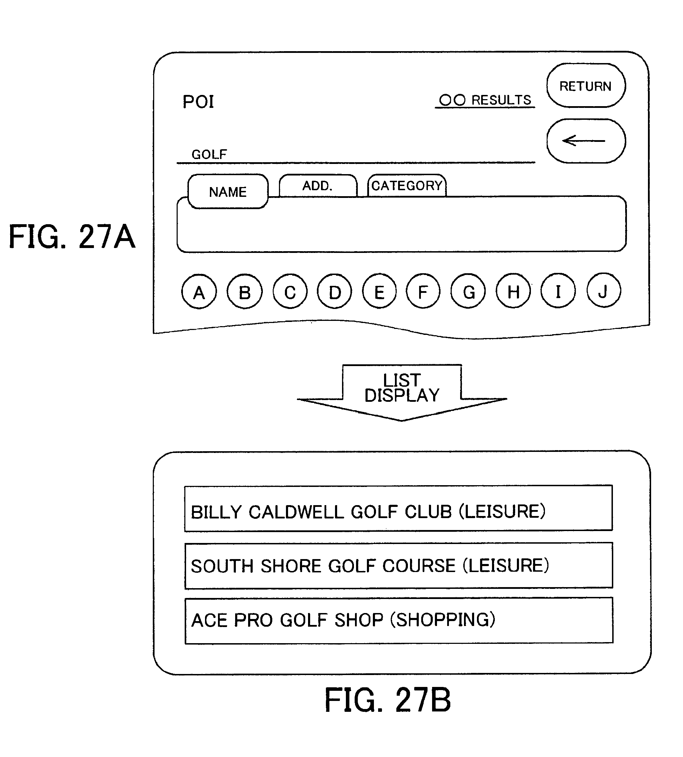

FIG. 27A and FIG. 27B show the differences in the display of the lists in the case in which a modifying rule that changes the priority order score according to the genre is applied as a priority order score modifying rule.
In FIG. 27A, when the end key (Enter) 427 is selected while the keyword "golf" has been input and displayed in the input character column 423, based on the priority order score modifying rule, as shown in FIG. 27B, a list is displayed in the order: "Billy Caldwell Golf Club (leisure)", "South Shore Golf Course (leisure)", "Ace Pro Golf Shop (shopping)", and the like.

In this manner, even in a navigation system that has US specifications, in which alphabet characters are input into the input character column 423, it is possible to display a list of destination candidates in an order that is more appropriate to the user by changing the order of the list by applying a priority order score modifying rules similarly to the first embodiment.

In the second embodiment, a navigation apparatus having US specifications was explained as an example of a navigation apparatus that is used outside Japan. However, the country or region in which the navigation apparatus may be used not limited thereby. For example, it is possible to use the navigation apparatus in any freely chosen country or region, such as Germany, Spain, France, Arab countries, China, Korea, or Australia or the like.
However, the input apparatus 41 is provided with the input keyboard 422 that is compatible with the language of the country (region) in which the navigation apparatus is to be used, and in addition, the specifications of each set of data correspond to the country (region) in which the navigation to be used.
For example, in the case in which the navigation apparatus is to be used in China, the input apparatus 41 is provided with the input keyboard 422 that is compatible with the Pinyin input for the Chinese language. In addition, data that represents, in the regional language, the names in the destination data that correspond to the country or region in which the navigation apparatus is to be used are stored in the destination data file 56.

The language that is to be input does not necessarily correspond to the country (region) in which the navigation apparatus is used. For example, a navigation apparatus compatible with German language input may be used in France. In this case, data that is compatible with the input language is stored in the data that serves as the search object when carrying out a destination search, that is, the data that is compared with the input characters (for example, the name of the destination, the keywords, and the address and the like), in the destination data file 56 and the keyword data file 58 and the like.
Note that in addition to the input language, data that is compatible with the language of the country (region) where the navigation apparatus is to be used may be stored in the data that is to be searched.
In addition, data that will not become a search object, for example, data for supplementary information, which carrying out destination searches, does not need to store data that is compatible with the input language. For example, in data that will not become a search object, data that is compatible with an input language may be stored, data that is compatible with the language of a country (region) in which the navigation apparatus will be used may be stored, and data that is compatible with both the input language and the language of the country (region) in which the navigation apparatus is to be used may be stored.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation apparatus comprising:
a keyword storing unit (58) adapted for storing a plurality of keywords;
a destination data storing unit (56) adapted for storing a plurality of sets of destination data that includes the destination data to which one or more keywords correspond;
a character input unit (41) adapted for inputting search characters;
a keyword display unit (21, 42) adapted for, among the keywords that have been stored in the keyword storing unit (58), narrowing down and displaying keywords that include the input characters;
a keyword selecting unit adapted for selecting the displayed keywords;
a narrowing-down unit (21) adapted for narrowing down the destination data that includes the selected keywords as candidate destinations;
a candidate destination display unit (42) adapted for displaying the candidate destinations that have been narrowed down; and
a destination selection unit adapted for selecting the displayed candidate destinations.

2. The navigation apparatus according to claim 1, wherein each of the keywords that are stored in the keyword storing unit (58) are words that are included in the notation of the plurality of sets of destination data.

3. The navigation apparatus according to claim 1 or 2, wherein
the keywords are created in correspondence to at least two among each of items, including name, address, and genre, that correspond to the content of the destination data; and
the keyword display unit (21, 42) is adapted for narrowing down and displaying of the keywords for each of the items.

4. The navigation apparatus according to claim 1, 2, or 3, wherein
associated keywords, which are associated with the keywords, correspond to at least a portion of the keywords that have been stored in the keyword storing unit (58); and
the keyword display unit (21, 42) is adapted for narrowing down and displaying, including associated keywords that correspond to the selected keywords.

5. The navigation apparatus according to any one of claims 1 to 4, wherein
a priority level during display and modifying conditions that modify the priority level based on current conditions are determined for each of the keywords that have been stored in the keyword storing unit (58); and
the keyword display device (21, 42) is adapted for prioritizing and displaying the keywords starting from the keywords for which the priority level is high after the priority level of the narrowed-down keywords has been modified based on the current conditions

6. The navigation apparatus according to claim 5, wherein the current condition that modifies the priority level is at least one condition among a corresponding season, a corresponding weather, a corresponding time, a type, and a region.

7. A navigation program product that when executed on a computer causes the computer to performs the steps of:
inputting search characters by a character input unit;
among keywords that have been stored in a keyword storing unit, which stores the plurality of keywords, narrowing down and displaying the keywords that include the input characters by a keyword display unit;
selecting the displayed keywords by a keyword selecting unit;
narrowing down the destination data that includes the selected keywords as candidate destinations from a destination data storing unit (56) that stores the plurality of sets of destination data that includes the destination data to which one or more keywords correspond by a narrowing-down unit (21);
displaying the candidate destinations that have been narrowed down by a candidate destination display unit (42); and
selecting the displayed candidate destinations by a destination selection unit.
